# EUROPÄISCHE PATENTSCHRIFT

(11) **EP 4 377 982 B1**
(45) Veröffentlichungstag und Bekanntmachung des Hinweises auf die Patenterteilung: **04.11.2026**
(21) Anmeldenummer: 22772861.5
(22) Anmeldetag: 31.08.2022
(51) Int. Cl.: H01H 9/54, H02H 3/08, H02H 3/02, H02H 3/04, H02H 3/06

(54) **SCHUTZSCHALTGERÄT UND VERFAHREN**
CIRCUIT BREAKER DEVICE AND METHOD
PROCÉDÉ ET DISPOSITIF DISJONCTEUR

(30) Priorität: 28.09.2021 DE 102021210812; 28.09.2021 DE 102021210824
(43) Veröffentlichungstag der Anmeldung: 05.06.2024
(73) Patentinhaber: Siemens Aktiengesellschaft, 80333 München (DE)
(72) Erfinder: TANNHÄUSER, Marvin, 91353 Hausen (DE)
(74) Vertreter: Siemens Patent Attorneys
(86) Internationale Anmeldenummer: PCT/EP2022/074196
(87) Internationale Veröffentlichungsnummer: WO 2023/052022

(56) Entgegenhaltungen:
- DE-A1- 102019 212 661
- US-A1- 2020 366 078
- US-A1- 2021 066 013

## Beschreibung

Die Erfindung betrifft das technische Gebiet eines Schutzschaltgerätes für einen Niederspannungsstromkreis mit einer elektronischen Unterbrechungseinheit nach dem Oberbegriff von Patentanspruch 1 und ein Verfahren für ein Schutzschaltgerät für einen Niederspannungsstromkreis mit einer elektronischen Unterbrechungseinheit nach dem Oberbegriff von Patentanspruch 17.

Mit Niederspannung sind Spannungen von bis zu 1000 Volt Wechselspannung oder bis zu 1500 Volt Gleichspannung gemeint. Mit Niederspannung sind insbesondere Spannungen gemeint, die größer als die Kleinspannung, mit Werten von 50 Volt Wechselspannung bzw. 120 Volt Gleichspannung, sind.

Mit Niederspannungsstromkreis bzw. -netz oder -anlage sind Stromkreise mit Nennströmen bzw. Bemessungsströmen von bis zu 125 Ampere, spezifischer bis zu 63 Ampere gemeint. Mit Niederspannungsstromkreis sind insbesondere Stromkreise mit Nennströmen bzw. Bemessungsströmen von bis zu 50 Ampere, 40 Ampere, 32 Ampere, 25 Ampere, 16 Ampere oder 10 Ampere gemeint. Mit den genannten Stromwerten sind insbesondere Nenn-, Bemessungs- oder/und Abschaltströme gemeint, d.h. der Strom der im Normalfall maximal über den Stromkreis geführt wird bzw. bei denen der elektrische Stromkreis üblicherweise unterbrochen wird, beispielsweise durch eine Schutzeinrichtung, wie ein Schutzschaltgerät, Leitungsschutzschalter oder Leistungsschalter. Die Nennströme können sich weiter staffeln, von 0,5 A über 1 A, 2 A, 3 A, 4 A, 5 A, 6 A, 7 A, 8 A, 9 A, 10 A, usw. bis 16 A.

Leitungsschutzschalter sind seit langem bekannte Überstromschutzeinrichtungen, die in der Elektroinstallationstechnik in Niederspannungsstromkreisen eingesetzt werden. Diese schützen Leitungen vor Beschädigung durch Erwärmung infolge zu hohen Stromes und/oder Kurzschluss. Ein Leitungsschutzschalter kann den Stromkreis bei Überlast und/oder Kurzschluss selbsttätig abschalten. Ein Leitungsschutzschalter ist ein nicht selbsttätig zurückstellendes Sicherungselement.

Leistungsschalter sind, im Gegensatz zu Leitungsschutzschaltern, für Ströme größer als 125 A vorgesehen, teilweise auch schon ab 63 Ampere. Leitungsschutzschalter sind deshalb einfacher und filigraner aufgebaut. Leitungsschutzschalter weisen üblicherweise eine Befestigungsmöglichkeit zur Befestigung auf einer so genannten Hutschiene (Tragschiene, DIN-Schiene, TH35) auf.

Leitungsschutzschalter gemäß dem Stand der Technik sind elektromechanisch aufgebaut. In einem Gehäuse weisen sie einen mechanischen Schaltkontakt bzw. Arbeitsstromauslöser zur Unterbrechung (Auslösung) des elektrischen Stromes auf. Üblicherweise wird ein Bimetall-Schutzelement bzw. Bimetall-Element zur Auslösung (Unterbrechung) bei länger anhaltenden Überstrom (Überstromschutz) respektive bei thermischer Überlast (Überlastschutz) eingesetzt. Ein elektromagnetischer Auslöser mit einer Spule wird zur kurzzeitigen Auslösung bei Überschreiten eines Überstromgrenzwerts bzw. im Falle eines Kurzschlusses (Kurzschlussschutz) eingesetzt. Eine oder mehrere Lichtbogenlöschkammer(n) bzw. Einrichtungen zur Lichtbogenlöschung sind vorgesehen. Ferner Anschlusselemente für Leiter des zu schützenden elektrischen Stromkreises.

Schutzschaltgeräte mit einer elektronischen Unterbrechungseinheit sind relativ neuartige Entwicklungen. Diese weisen eine halbleiterbasierte elektronische Unterbrechungseinheit auf. D.h. der elektrische Stromfluss des Niederspannungsstromkreises wird über Halbleiterbauelemente respektive Halbleiterschalter geführt, die den elektrischen Stromfluss unterbrechen bzw. leitfähig geschaltet werden können. Schutzschaltgeräte mit einer elektronischen Unterbrechungseinheit weisen ferner häufig ein mechanisches Trennkontaktsystem auf, insbesondere mit Trennereigenschaften gemäß einschlägigem Normen für Niederspannungsstromkreise, wobei die Kontakte des mechanischen Trennkontaktsystems in Serie zur elektronischen Unterbrechungseinheit geschaltet sind, d.h. der Strom des zu schützenden Niederspannungsstromkreises wird sowohl über das mechanische Trennkontaktsystem als auch über die elektronische Unterbrechungseinheit geführt.

Die vorliegende Erfindung bezieht sich insbesondere auf Niederspannungswechselstromkreise, mit einer Wechselspannung, üblicherweise mit einer zeitabhängigen sinusförmigen Wechselspannung mit der Frequenz f. Die zeitliche Abhängigkeit des momentanen Spannungswertes u(t) der Wechselspannung ist durch die Gleichung: $u \left(t\right) = U * sin \left(2π*f*t\right)$ beschrieben. Wobei:
- u(t): = momentaner Spannungswert zu der Zeit t
- U: = Amplitude der Spannung

Eine harmonische Wechselspannung lässt sich durch die Rotation eines Zeigers darstellen, dessen Länge der Amplitude (U) der Spannung entspricht. Die Momentanauslenkung ist dabei die Projektion des Zeigers auf ein Koordinatensystem. Eine Schwingungsperiode entspricht einer vollen Umdrehung des Zeigers und dessen Vollwinkel beträgt 2π (2Pi) bzw. 360°. Die Kreisfrequenz ist die Änderungsrate des Phasenwinkels dieses rotierenden Zeigers. Die Kreisfrequenz einer harmonischen Schwingung beträgt immer das 2π-fache ihrer Frequenz, d.h.: $ω = 2 π * f = 2 π / T = Kreisfrequenz der Wechselspannung$ (T = Periodendauer der Schwingung)

Häufig wird die Angabe der Kreisfrequenz (ω) gegenüber der Frequenz (f) bevorzugt, da sich viele Formeln der Schwingungslehre aufgrund des Auftretens trigonometrischer Funktionen, deren Periode per Definition 2π ist, mit Hilfe der Kreisfrequenz kompakter darstellen lassen: $u \left(t\right) = U * sin \left(ωt\right)$

Im Falle zeitlich nicht konstanter Kreisfrequenzen wird auch der Begriff momentane Kreisfrequenz verwendet.

Bei einer sinusförmigen, insbesondere zeitlich konstanten, Wechselspannung entspricht der zeitabhängige Wert aus der Winkelgeschwindigkeit ω und der Zeit t dem zeitabhängigen Winkel φ(t), der auch als Phasenwinkel φ(t) bezeichnet wird. D.h. der Phasenwinkel φ(t) durchläuft periodisch den Bereich 0...2π bzw. 0°...360°. D.h. der Phasenwinkel nimmt periodisch einen Wert zwischen 0 und 2π bzw. 0° und 360° an (φ = n* (0...2π) bzw. φ = n*(0°...360°), wegen Periodizität; verkürzt: φ = 0...2π bzw. φ = 0°...360°).

Mit momentanem Spannungswert u(t) ist folglich der momentane Wert der Spannung zum Zeitpunkt t, d.h. bei einer sinusförmigen (periodischen) Wechselspannung der Wert der Spannung zum Phasenwinkel φ gemeint (φ = 0...2π bzw. φ = 0°...360°, der jeweiligen Periode).

In der US-amerikanischen Patentanmeldung US 2020/0366078 A1 wird ein intelligenter Leistungsschalter beschrieben. Ein Leistungsschalter umfasst einen elektromechanischen Schalter, einen Stromsensor, einen Spannungssensor und einen Prozessor. Der elektromechanische Schalter ist in Reihe zwischen einem Leitungseingangsanschluss und einem Lastausgangsanschluss des Leistungsschalters angeschlossen und so konfiguriert, dass er in einen geschalteten geschlossenen Zustand oder einen geschalteten offenen Zustand versetzt werden kann. Der Stromsensor ist so konfiguriert, dass er eine Stromstärke erfasst, die in einem Pfad zwischen dem Leitungseingangsanschluss und dem Lastausgangsanschluss fließt, und ein Strommesssignal erzeugt. Der Spannungssensor ist so konfiguriert, dass er eine Spannungsstärke an einem Punkt auf dem Pfad zwischen dem Leitungseingangsanschluss und dem Lastausgangsanschluss erfasst, und ein Spannungsmesssignal erzeugt. Der Prozessor ist so konfiguriert, dass er das Strommesssignal und das Spannungsmesssignal empfängt und verarbeitet, um Betriebsstatusinformationen des Leistungsschalters zu ermitteln und Stromverbrauchsinformationen einer an den Lastausgangsanschluss angeschlossenen Last zu ermitteln.

In der US-amerikanischen Patentanmeldung US 2021/0066013 A1 wird ein Halbleiter-Leistungsschalter Ein Halbleiterschalter (SSCB) mit Selbstdiagnose-, Selbstwartungs- und Selbstschutzfunktionen beschrieben. Ein Halbleiterschalter (SSCB) mit Selbstdiagnose-, Selbstwartungs- und Selbstschutzfunktionen umfasst: ein Leistungshalbleitergerät; eine Luftspalttrenneinheit, die in Reihe mit dem Leistungshalbleitergerät geschaltet ist; eine Sensor- und Antriebsschaltung, die das Leistungshalbleitergerät ausschaltet, wenn ein Kurzschluss oder eine Überlastung von unannehmbar langer Dauer erkannt wird; und eine Mikrocontrollereinheit (MCU), die die Luftspalttrenneinheit auslöst, um einen Luftspalt zu bilden und eine angeschlossene Last galvanisch zu isolieren, nachdem die Sensor- und Antriebsschaltung das Leistungshalbleitergerät ausgeschaltet hat. Die MCU ist außerdem so konfiguriert, dass sie die Funktionsfähigkeit der Luftspalttrenneinheit, des Leistungshalbleitergeräts und anderer kritischer Komponenten des SSCB überwacht und gegebenenfalls Korrekturmaßnahmen ergreift, um zu verhindern, dass der SSCB und die angeschlossene Last beschädigt oder zerstört werden, und/oder um Personen und die Umwelt vor gefährlichen elektrischen Bedingungen zu schützen.

In der US-amerikanischen Patentanmeldung US 2017/004948 A1 wird eine Stromkreisschutzvorrichtung beschrieben. Eine Stromkreisschutzvorrichtung umfasst einen Halbleiterschalter, der einen Stromkreis innerhalb einer festgelegten Reaktionszeit öffnen kann, wenn ein Fehlerstromzustand erkannt wird. Ein mechanischer Schalter ist in Reihe mit dem Halbleiterschalter geschaltet. Der mechanische Schalter kann den Stromkreis nach dem Öffnungsvorgang des Halbleiterschalters öffnen. Ein Controller ist mit dem Halbleiterschalter und dem mechanischen Schalter gekoppelt. Der Controller kann den Fehlerstromzustand im Stromkreis erkennen und den mechanischen Schalter für einen koordinierten Betrieb mit dem Halbleiterschalter steuern. In einigen Implementierungen beträgt die Reaktionszeit zwischen zwei und zwanzig Mikrosekunden. Der mechanische Leistungsschalter kann den Stromkreis bei einem niedrigen Abschaltstrom sicher physisch öffnen (z. B. öffnet der Halbleiterschalter den Stromkreis schnell und verhindert, dass der Strom auf gefährliche Werte ansteigt).

Die deutsche Offenlegungsschrift DE 10 2018 213 354 A1 beschreibt ein Schaltgerät und Verfahren. Die Erfindung betrifft ein Schaltgerät für einen mehrere Leiter aufweisenden Nieder-spannungsstromkreis,
- mit einem Gehäuse, mit am Gehäuse angeordneten Anschlusskontakten zum Anschluss von Leitern des Niederspannungsstromkreises,
- mit einer im Gehäuse befindlichen mechanischen Einheit mit einer Trennfunktion und einer AUS- oder EIN-Stellung, die Trennkontakte zur galvanischen Unterbrechung der Leiter des Niederspannungsstromkreises aufweist. Eine elektronische Einheit ist vorgesehen, die stromflussseitig in Serie zur mechanischen Einheit geschaltet ist, ein mit der mechanischen Einheit verbundener Hilfsschalter ist vorgesehen, der wiederum mit der elektronischen Einheit verbunden ist, der Hilfsschalter und die elektronische Einheit sind derart ausgestaltet, dass bei einem Öffnungsvorgang der mechanischen Einheit die elektronische Einheit hochohmig wird.

Aufgabe der vorliegenden Erfindung ist es, ein Schutzschaltgerät eingangs genannter Art zu verbessern, insbesondere die Sicherheit eines derartigen Schutzschaltgerätes bzw. alternativ die Versorgungssicherheit eine Niederspannungsstromkreises zu verbessern bzw. ein neuartiges Konzept für ein derartiges Schutzschaltgerät zu schaffen, insbesondere die Sicherheit der lastseitig angeschlossenen elektrischen Leitung zu verbessern.

Diese Aufgabe wird durch ein Schutzschaltgeräte mit den Merkmalen des Patentanspruchs 1, sowie durch ein Verfahren gemäß Patentanspruch 17 gelöst.

Erfindungsgemäß ist ein Schutzschaltgerät zum Schutz eines elektrischen Niederspannungsstromkreises, insbesondere Niederspannungswechselstromkreises, vorgesehen, aufweisend:
- ein Gehäuse mit netzseitigen und lastseitigen Anschlüssen für Leiter des Niederspannungsstromkreises,
- eine Stromsensoreinheit, zur Ermittlung der Höhe des Stromes des Niederspannungsstromkreises,
- eine mechanische Trennkontakteinheit, die einen geschlossenen Zustand der Kontakte für einen Stromfluss im Niederspannungsstromkreis oder einen geöffneten Zustand der Kontakte für eine stromflussvermeidende galvanische Trennung im Niederspannungsstromkreis aufweist,

die mechanische Trennkontakteinheit ist insbesondere durch eine mechanische Handhabe bedienbar und schaltbar, so dass ein Öffnen von Kontakten zur Vermeidung eines Stromflusses oder ein Schließen der Kontakte für einen Stromfluss im Niederspannungsstromkreis (durch die Handhabe) schaltbar ist, damit ist (insbesondere) eine galvanische Trennung im Niederspannungsstromkreis schaltbar;
bei einer mechanischen Trennkontakteinheit wird ein Öffnen von Kontakten auch als Freischalten und ein Schließen von Kontakten als Zuschalten bezeichnet;
   - eine elektronische Unterbrechungseinheit, die stromkreisseitig in Serie zur mechanischen Trennkontakteinheit geschaltet ist und die durch halbleiterbasierte Schaltelemente einen hochohmigen (insbesondere nichtleitenden) Zustand der Schaltelemente zur Vermeidung eines Stromflusses und einen niederohmigen Zustand der Schaltelemente zum Stromfluss im Niederspannungsstromkreis aufweist;
bei einer elektronische Unterbrechungseinheit wird ein hochohmiger (insbesondere nichtleitender) Zustand der Schaltelemente (zur Vermeidung eines Stromflusses) auch als ausgeschalteter Zustand (Vorgang: Ausschalten) und ein niederohmiger (leitender) Zustand der Schaltelemente (zum Stromfluss) als eingeschalter Zustand (Vorgang: Einschalten) bezeichnet;
   - einer Steuerungseinheit, die mit der Stromsensoreinheit, der mechanischen Trennkontakteinheit und der elektronischen Unterbrechungseinheit verbunden ist, wobei bei Überschreitung von Stromgrenzwerten oder Strom-Zeitgrenzwerten (d.h. wenn ein Stromgrenzwert für eine bestimmte Zeitspanne überschritten wird) eine Vermeidung eines Stromflusses im Niederspannungsstromkreises initiiert wird, insbesondere um einen Kurzschlussstrom zu vermeiden.

Das Schutzschaltgerät ist erfindungsgemäß derart ausgestaltet, dass nach einer Vermeidung eines Stromflusses durch einen hochohmigen Zustand der Schaltelemente der elektronischen Unterbrechungseinheit und geschlossenem Zustand der Kontakte eine Prüfung auf mindestens einen elektrischen Parameter an mindestens einem lastseitigen Anschluss erfolgt.

Dies hat den besonderen Vorteil, dass nach einem stromflussvermeidenden Ereignis eine weitere Überprüfung durch das Schutzschaltgerät erfolgt, vorteilhaft an den das stromflussvermeidenden Ereignis üblicherweise hervorrufenden lastseitigen Anschlüssen, vorteilhaft durch Prüfung mindestens eines elektrischen Parameters. So kann der Zustand an den lastseitigen Anschlüssen weiter überwacht werden und bei Änderung des Zustandes vorteilhaft eine weitere Aktion erfolgen, beispielsweise gemäß den vorteilhaften Ausgestaltungen der Erfindung.

Andererseits wird so ein völlig neues Betriebskonzept eines Schutzschaltgerätes vorgestellt, bei dem, im Gegensatz zu beispielsweise bisherigen Leitungsschutzschalter, eine Überprüfung auch nach einem stromflussvermeidenden Ereignis durchgeführt wird.

Vorteilhafte Ausgestaltungen der Erfindung sind in den Unteransprüchen und im Ausführungsbeispiel angegeben.

Das Schutzschaltgerät enthält erfindungsgemäß zwei Schalteinheiten, eine mechanische Trennkontakteinheit (Schalteinheit) und eine elektronische Unterbrechungseinheit (Schalteinheit), wobei
- die mechanische Trennkontakteinheit die Funktion zum (galvanischen) Zuschalten und Freischalten aufweist (durchführt/übernimmt), und
- die elektronische Unterbrechungseinheit die Funktion zum Ein- und Ausschalten des Stromes bzw. der Spannung aufweist (durchführt/übernimmt).

Insbesondere ist durch die mechanische Handhabe nur die mechanische Trennkontakteinheit bedienbar. Das Ein- und Ausschalten mittels der elektronischen Unterbrechungseinheit ist nicht (direkt) am Gerät bedienbar.

In einer vorteilhaften Ausgestaltung der Erfindung weist der mindestens eine elektrische Parameter einen, insbesondere schutzschaltgerätabhängigen, Sollbereich auf.

Die Prüfung wird so lange durchgeführt, bis der elektrische Parameter im Sollbereich liegt.

dass bei im Sollbereich liegenden elektrischen Parameter die elektronische Unterbrechungseinheit in den niederohmigen Zustand wechselt.

Dies hat den besonderen Vorteil, dass ein völlig neues Betriebskonzept eines Schutzschaltgerätes vorgestellt wird. Bei Leitungsschutzschaltern gemäß dem Stand der Technik ist nach einem stromflussvermeidenden Ereignis eine durch das Schutzschaltgerät selbst initiierte Wiedereinschaltung bzw. Energieversorgung der Lastseite nicht ohne weiteres vorgesehen. Allenfalls gibt es Zusatzgeräte, wie so genannte Fernantriebe mit ARD (Automatic reclose device) oder motorische Antriebe, die zusätzlich extern angebracht werden müssen, kostenintensiv sind und zusätzlichen Platz benötigen. Diese Zusatzgeräte weisen jedoch eine Wiedereinschaltzeit im Minutenbereich, schnellstenfalls im mehrere bzw. größeren Sekunden-Bereich auf. Vorteilhaft wird durch die erfindungsgemäße Ausgestaltung des neuartigen Schutzschaltgerätes bei Wegfall des stromflussvermeidenden Ereignisses respektive im Sollbereich liegenden elektrischen Parameter am lastseitigen Anschluss bzw. den lastseitigen Anschlüssen eine Energieversorgung durch den niederohmigen Zustand (automatisch bzw. vordefiniert) wieder hergestellt, dies erfolgt mit der elektronischen Unterbrechungseinheit im Millisekundenbereich bzw. Mikrosekundenbereich.

In einer vorteilhaften Ausgestaltung der Erfindung ist der Sollbereich durch einen Sollwert gekennzeichnet. Insbesondere wird die Prüfung so lange durchgeführt, bis der elektrische Parameter größer als ein minimaler Sollwert ist.

Dies hat den besonderen Vorteil, dass ein besonders einfacher Sollbereich vorliegt, eine Prüfung nur auf Überschreiten des Sollwertes durchgeführt wird. Somit eine (ökonomisch) einfache Implementierung der Erfindung möglich ist.

In einer vorteilhaften Ausgestaltung der Erfindung wechselt bei im Sollbereich liegenden elektrischen Parameter die elektronische Unterbrechungseinheit erst dann in den niederohmigen Zustand, wenn der elektrische Paramater für einen ersten Zeitbereich im Sollbereich liegt (Zeitbereich der Fehlerfreiheit). Insbesondere ist der erste Zeitbereich einstellbar, beispielsweise durch eine Eingabeeinheit (Kommunikationseinheit).

Der erste Zeitbereich kann beispielsweise 10ms bis 100ms betragen, weiter hinsichtlich kürzerer Zeiten kann der erste Zeitbereich 1ms bis 100ms sein. Der erste Zeitbereich kann hinsichtlich längerer Zeiten beispielsweise 10ms bis 10s betragen, spezieller 10ms bis 1s oder 10ms bis 200ms. Jeder Zwischenwert ist möglich und offenbart.

Dies hat den besonderen Vorteil, dass eine höhere Versorgungssicherheit der Energieversorgung gegeben ist, da bei kurzzeitigen Fehlern die Energieversorgung nicht unterbrochen wird.

In einer vorteilhaften Ausgestaltung der Erfindung weist das Schutzschaltgerät eine Eingabeeinheit auf. Bei im Sollbereich liegenden elektrischen Parameter wechselt die elektronische Unterbrechungseinheit erst dann in den niederohmigen Zustand, wenn mittels der Eingabeeinheit (Kommunikationseinheit) eine Quittierung erfolgt bzw. nachdem (mittels der Eingabeeinheit (Kommunikationseinheit)) eine Quittierung erfolgt.

Dies hat den besonderen Vorteil, dass eine höhere Sicherheit im Niederspannungsstromkreis gegeben ist, da bei einem Fehler erst eine Quittierung durch eine Bedienperson erfolgen muss.

In einer vorteilhaften Ausgestaltung der Erfindung erfolgt die Prüfung auf mindestens einen elektrischen Parameter nach Überschreitung des Stromgrenzwertes oder Strom-Zeitgrenzwertes innerhalb einer ersten Zeitspanne Pre-Trip 1 (Zeitspanne der ersten Prüfungszeit). Insbesondere ist die erste Zeitspanne einstellbar, beispielsweise durch eine Eingabeeinheit (Kommunikationseinheit). Die erste Zeitspanne kann insbesondere kleiner als 200 ms, 100 ms, 50ms, 30ms, 20 ms oder 10 ms sein. Zwischenwerte sind ebenfalls möglich.

Dies hat den besonderen Vorteil, dass insbesondere vor einer durch eine Norm bestimmtes zeitliches Auslöseverhalten (Schutzschaltgerät muss nach 100 ms [nach DIN EN 60898-1 wird geprüft, dass innerhalb von 100 ms (im Kurzschlussfall) ausgelöst wird] den Stromkreis unterbrechen) eine Prüfung durchgeführt wird, um so normkonform Fehler bzw. Fehlerzustände zu ermitteln bzw. den Stromkreis gegebenenfalls wieder (normkonform) mit Energie zu versorgen. Vorteilhaft ist diese erste Zeitspanne konfigurierbar bzw. ist diese Zeitspanne vom auslösenden Ereignis/Fehlerfall abhängig.

In einer vorteilhaften Ausgestaltung der Erfindung werden nach Ablauf der ersten Zeitspanne die Kontakte der mechanischen Trennkontakteinheit geöffnet, wenn mindestens ein elektrischer Parameter außerhalb seines Sollbereichs liegt. Dies hat den besonderen Vorteil, dass ein äquivalentes Verhalten (durch galvanische Unterbrechung) des neuartigen Schutzschaltgerätes zu bisherigen Geräten, wie beispielsweise Leitungsschutzschaltern, vorliegt, um so Normvorgaben zu erfüllen. Vorteilhaft kann vor der galvanischen Unterbrechung eine Prüfung durchgeführt werden, was mittels bisheriger Schutzschaltgeräte nicht möglich ist.

In einer vorteilhaften Ausgestaltung der Erfindung ist der elektrische Parameter ein Strom, eine Spannung, ein Widerstand, eine Kapazität, eine Induktivität oder eine Impedanz. In einer ersten Variante ist der elektrische Parameter insbesondere ein Widerstand, eine Kapazität, eine Induktivität oder eine Impedanz, spezieller der Widerstand oder die Impedanz. In einer zweiten Variante ist der elektrische Parameter insbesondere ein Strom oder eine Spannung.

Dies hat den besonderen Vorteil, dass eine spezifische Messung für den elektrischen Parameter implementiert werden kann.

In einer vorteilhaften Ausgestaltung der Erfindung ist die mechanische Trennkontakteinheit den lastseitigen Anschlüssen und die elektronische Unterbrechungseinheit den netzseitigen Anschlüssen zugeordnet.

Dies hat den besonderen Vorteil, dass eine das erfindungsgemäße Verhalten des Schutzschaltgerätes unterstützende Architektur gegeben ist, da einerseits das Schutzschaltgerät bei hochohmiger Unterbrechungseinheit der Stromfluss unterbrochen ist, durch die lastseitigen geschlossenen Kontakte aber weiterhin eine erfindungsgemäße Prüfung auf mindestens einen elektrischen Parameter an mindestens einem lastseitigen Anschluss erfolgen kann.

In einer vorteilhaften Ausgestaltung der Erfindung erfolgt die Prüfung auf mindestens einen elektrischen Parameter an mindestens einem lastseitigen Anschluss durch niederohmig werden mindestes eines Schaltelementes, insbesondere zweier oder aller Schaltelemente, der elektronischen Unterbrechungseinheit. Insbesondere durch niederohmig werden für eine erste Einschaltdauer.

Dies hat den besonderen Vorteil, dass eine einfache Möglichkeit für die Prüfung auf mindestens einen elektrischen Parameter an mindestens einem lastseitigen Anschluss gegeben ist, da lediglich die vorhandene elektronische Unterbrechungseinheit (kurzzeitig) in den niederohmigen Zustand geschaltet werden braucht, um kurzzeitig einen Messstrom bzw. eine Messspannung zu erzeugen, um die Prüfung auf mindestens einen elektrischen Parameter durchzuführen, beispielsweise für den Strom sowie für die Ermittlung der Höhe von Widerstand, Kapazität, Induktivität oder Impedanz.

Vorteilhaft ist dazu ferner eine Spannungssensoreinheit vorgesehen, insbesondere für die Ermittlung der Höhe von Widerstand, Kapazität, Induktivität oder Impedanz.

In einer vorteilhaften Ausgestaltung der Erfindung erfolgt die Prüfung auf mindestens einen elektrischen Parameter an mindestens einem lastseitigen Anschluss durch niederohmig werden der Schaltelemente der elektronischen Unterbrechungseinheit bei einem betragsmäßigen Momentanwert der Spannung, der kleiner als ein erster Spannungsschwellwert ist.

Der erste Spannungsschwellwert ist insbesondere kleiner als 50 Volt bzw. ein Wert der (Schutz-)Kleinspannung. Vorteilhaft ist der erste Spannungsschwellwert einstellbar.

Dies hat den besonderen Vorteil, dass die Prüfung auf mindestens einen elektrischen Parameter an mindestens einem lastseitigen Anschluss bei einer für Menschen ungefährlichen Spannung erfolgt, so dass die Sicherheit sowohl des Schutzschaltgerätes als auch im Niederspannungsstromkreis gegeben ist.

In einer vorteilhaften Ausgestaltung der Erfindung werden die Schaltelemente bei einem betragsmäßigen Momentanwert der Spannung, der größer als der erste Spannungsschwellwert ist, wieder hochohmig.

Dies hat wiederum den besonderen Vorteil, dass die Prüfung auf mindestens einen elektrischen Parameter an mindestens einem lastseitigen Anschluss bei einer für Menschen ungefährlichen Spannung erfolgt, so dass die Sicherheit sowohl des Schutzschaltgerätes als auch im Niederspannungsstromkreis gegeben ist.

In einer vorteilhaften Ausgestaltung der Erfindung erfolgt die Prüfung auf mindestens einen elektrischen Parameter an den lastseitigen Anschlüssen durch Anlegen einer Hilfsspannung, insbesondere Gleichspannung, die kleiner als eine erste Spannungsgrenze ist. Der erste Spannungsgrenze ist insbesondere kleiner als 50 Volt bzw. ein Wert der (Schutz-)Kleinspannung.

Dies hat wiederum den besonderen Vorteil, dass die Prüfung auf mindestens einen elektrischen Parameter an mindestens einem lastseitigen Anschluss durch eine andere Lösung bei einer für Menschen ungefährlichen Spannung erfolgt, so dass die Sicherheit sowohl des Schutzschaltgerätes als auch im Niederspannungsstromkreis gegeben ist.

In einer vorteilhaften Ausgestaltung der Erfindung erfolgt, insbesondere nach Ablauf der ersten Zeitspanne, die Prüfung auf mindestens einen elektrischen Parameter an mindestens einem lastseitigen Anschluss mit einem ersten zeitlichen Abstand. Der erste zeitlichen Abstand kann einstellbar bzw. konfigurierbar sein. Der erste zeitlichen Abstand beträgt insbesondere 1 s, 10 s, 30 s, 60 s respektive 1 min, 5 min, 10 min oder 15 min (min = Minuten). Jeder Zwischenwert ist möglich.

Dies hat den besonderen Vorteil, dass eine zyklische Prüfung über einen längeren Zeitraum erfolgt, ohne dauerhaft Prüfungsfunktionen bzw. Prüfungsroutinen durchzuführen.

In einer vorteilhaften Ausgestaltung der Erfindung wechselt nach Ablauf einer ersten Zeitgrenze die mechanische Trennkontakteinheit in einen geöffneten Zustand der Trennkontakte. Die erste Zeitgrenze kann einstellbar bzw. konfigurierbar sein. Die erste Zeitgrenze beträgt beispielsweise 1 min, 5 min, 10 min, 15 min, 30 min, 1h, 8h, 24h, 36h oder 48h. Jeder Zwischenwert ist möglich. Der erste zeitliche Abstand richtet sich nach der ersten Zeitgrenze. D.h. der erste zeitliche Abstand ist kleiner als die erste Zeitgrenze.

Dies hat den besonderen Vorteil, dass nach Ablauf der Zeitgrenze auf einen dauerhaften bzw. signifikanten Defekt im Niederspannungsstromkreis geschlossen werden kann und ein sicherer Zustand im Niederspannungsstromkreis durch galvanische Trennung initiiert wird.

In einer vorteilhaften Ausgestaltung der Erfindung ist eine Anzeigeeinheit zur Informationsanzeige am Schutzschaltgerät vorgesehen, die mit der Steuerungseinheit verbunden ist. Die Anzeigeeinheit zeigt insbesondere Zustände des Schutzschaltgerätes an. Ferner beispielsweise die Ausführung der Überprüfungsfunktionen oder/und dass bei Fehlerfreiheit automatisch wieder eingeschaltet wird.

Die Informationsanzeige zeigt insbesondere den Zustand der Schaltelemente der elektronischen Unterbrechungseinheit an. Ferner kann insbesondere die Stellung der Kontakte der mechanischen Trennkontakteinheit angezeigt werden.

Dies hat den besonderen Vorteil, dass ein Benutzer den Zustand des Schutzschaltgerätes schnell erkennen kann, insbesondere den Zustand der elektronischen Unterbrechungseinheit.

In einer vorteilhaften Ausgestaltung der Erfindung führt die Prüfung auf mindestens einen elektrischen Parameter an mindestens einem lastseitigen Anschluss (alternativ bzw. zusätzlich an mindestens einem netzseitigen Anschluss) eine Prüfung mindestens eines, insbesondere mehrerer oder aller, der nachfolgenden Parameter durch:
- Überprüfung auf Überschreitung eines ersten Überspannungswertes oder/und höheren zweiten Überspannungswertes oder/und höheren dritten Überspannungswertes für eine erste Dauer,
- Überprüfung auf Unterschreitung eines lastseitigen ersten oder/und zweiten Widerstandeswertes oder lastseitigen ersten oder/und zweiten Impedanzwertes für eine zweite Dauer.

Mit Überspannung bzw. Überspannungswert ist hierbei insbesondere ein Überschreiten der gültigen Betriebsspannung gemeint.

Nicht gemeint sind die Höhen von Überspannungsdips, beispielsweise bei so genannten Bursts bzw. Surges, die typischerweise bei 4 kV oder 8 kV liegen können (bei einem 230 Volt bzw. 400 Volt Netz), so genannte Netz-Überspannungen (d.h. beispielsweise das zehnfache der normativen Spannung des Niederspannungsstromkreises).

Insbesondere kann der erste Überspannungswert einen bestimmten Prozentsatz höher sein als der normative Spannungswert. Beispielsweise bei einem normativen Spannungswert von 230 Volt beispielsweise 10 % höher, 230V + 10%.

Insbesondere kann der zweite Überspannungswert einen bestimmten höheren Prozentsatz höher sein als der normative Spannungswert. Beispielsweise bei einem normativen Spannungswert von 230 Volt beispielsweise 20 % höher, 230V + 20%.

Insbesondere kann der dritte Überspannungswert einen bestimmten noch höheren Prozentsatz höher sein als der normative Spannungswert. Beispielsweise bei einem normativen Spannungswert von 230 Volt beispielsweise 30 % höher, 230V + 30%.

Dies hat den besonderen Vorteil, dass z.B. ein Schutzschaltgerät an eine Last mit fehlerhaften Parametern nicht eingeschaltet wird. So kann z.B. ein fehlender Schutz bei fehlerhaftem Anschluss von z.B. eines 230 Volt Schutzschaltgerätes an z.B. den beiden Phasen mit einer Spannung von 400 Volt erkannt werden und vermieden werden. Ebenso kann eine damit in Zusammenhang stehende potenzielle Zerstörung des Schutzschaltgerätes vermieden werden. In analoger Weise kann ein (Wieder-)Einschalten auf einen Kurzschluss erkannt und vermieden werden. So wird eine erhöhte Betriebssicherheit im Niederspannungsstromkreis erreicht.

D.h. mit Überprüfung auf Überschreitung oder Unterschreitung eines Parameters ist die Überschreitung bzw. Unterschreitung mit der jeweiligen Dauer (erste, zweite Dauer) gemeint. D.h. erst nach Überschreitung / Unterschreitung für die Dauer liegt ein möglicher Fehler vor (z.B. Überspannung). Die erste bzw. zweite Dauer kann beispielsweise ein Wert aus dem Bereich von 5 ms bis 50 ms bis 500 ms bis 5 s sein (jeder Zwischenwert ist möglich und offenbart).

In einer vorteilhaften Ausgestaltung der Erfindung wird, abhängig von der vorhergehenden Implementierung:
bei Überschreitung des ersten Überspannungswertes eine Überspannungsinformation abgegeben,
bei Überschreitung des zweiten Überspannungswertes erfolgt ein hochohmig werden der elektronischen Unterbrechungseinheit,
bei Überschreitung des dritten Überspannungswertes erfolgt ein Öffnen der Kontakte (Freischalten) durch die mechanische Trennkontakteinheit,
bei Unterschreitung des lastseitigen ersten Widerstandeswertes oder lastseitigen ersten Impedanzwertes (für die zweite Dauer) wird eine Impedanzinformation abgegeben, oder
bei Unterschreitung des lastseitigen zweiten Widerstandeswertes oder lastseitigen zweiten Impedanzwertes bleibt die elektronische Unterbrechungseinheit hochohmig.

Dies hat den besonderen Vorteil, dass abgestuft definierte Maßnahmen - Warnung - hochohmig bleiben - galvanische Trennung - durchgeführt werden, abhängig vom Über- bzw. Unterschreiten bestimmter definierter Paramater. Ein Wiedereinschalten auf einen Fehler wird vermieden bzw. kann nach Wegfall des Fehlers vorteilhaft wieder erfolgen. So wird eine erhöhte Betriebssicherheit bzw. Versorgungssicherheit im Niederspannungsstromkreis erreicht.

In einer vorteilhaften Ausgestaltung der Erfindung wird die Prüfung mindestens eines, insbesondere mehrerer oder aller, der Parameter kontinuierlich durchgeführt. Kontinuierlich heißt in diesem Zusammenhang spezieller, dass z.B. Prüfungen in jeder Netzperiode (Vollwelle) oder Halbwelle der elektrischen Spannung (Halbschwingung) stattfindet. Alternativ jede zweite, dritte, vierte, ... n-te Netzperiode eine Prüfung durchzuführen. Dies erfolgt insbesondere, sofern kein Öffnen der Kontakte erfolgte. Bei nicht mehr vorliegender Über- bzw. Unterschreitung des(/der) jeweiligen Parameter(s) wird ein niederohmiger Zustand der Schaltelemente zugelassen.

Dies hat den besonderen Vorteil, dass ein differenziertes Verhalten des Schutzschaltgerätes ermöglicht wird. Bei abweichenden Parametern am lastseitigen Anschluss, die gewisse Grenzwerte nicht überschreiten, bleibt das Schutzschaltgerät im zugeschalteten - aber nicht eingeschalteten - Zustand, bis gegebenenfalls die Parameter im Sollbereich bzw. normalen Bereich sind, insbesondere für den Zeitbereich. Dann kann wieder eingeschaltet werden. So wird eine hohe Flexibilität bei gleichzeitig hoher Sicherheit erreicht.

In einer vorteilhaften Ausgestaltung der Erfindung wird bei zugeschalteter Trennkontakteinheit und niederohmiger Unterbrechungseinheit und
- bei einem ermittelten Strom, der einen ersten Stromgrenzwert überschreitet, insbesondere dass der erste Stromgrenzwert für eine erste Zeit überschritten wird, die elektronische Unterbrechungseinheit hochohmig und die mechanische Trennkontakteinheit bleibt geschlossen.

Ferner kann:
- bei einem ermittelten Strom, der einen zweiten Stromgrenzwert, insbesondere für eine zweite Zeit, überschreitet, die elektronische Unterbrechungseinheit hochohmig werden und die mechanische Trennkontakteinheit geöffnet werden.

Ferner kann:
- bei einem ermittelten Strom, der einen dritten Stromgrenzwert überschreitet, sofort bzw. quasi sofort, die elektronische Unterbrechungseinheit hochohmig werden. Alternativ kann zusätzlich die mechanische Trennkontakteinheit geöffnet werden.

Dies hat den besonderen Vorteil, dass ein abgestuftes Abschaltkonzept für ein erfindungsgemäßes Schutzschaltgerät vorliegt.

In einer vorteilhaften Ausgestaltung der Erfindung ist das Schutzschaltgerät derart ausgestaltet, dass die Kontakte der mechanischen Trennkontakteinheit durch die Steuerungseinheit geöffnet, aber nicht geschlossen werden können.

Dies hat den besonderen Vorteil, dass eine erhöhte Betriebssicherheit im Niederspannungsstromkreis erreicht wird, insbesondere das ein elektronisches Zuschalten aus der Ferne nicht möglich ist.

In einer vorteilhaften Ausgestaltung der Erfindung erfolgt eine (mechanische) Anzeige der Kontaktstellung der mechanischen Trennkontakteinheit.

Dies hat den besonderen Vorteil, dass eine visuelle Prüfung der Kontaktstellung auch im energielosen Zustand möglich ist. Somit wird eine erhöhte Betriebssicherheit im Niederspannungsstromkreis erreicht.

In einer vorteilhaften Ausgestaltung der Erfindung weist die mechanische Trennkontakteinheit eine Freiauslösung auf, derart dass, wenn nach dem Beginn eines Schließvorganges der Kontakte ein Öffnen der Kontakte initiiert wird die Kontakte in die öffnende Stellung zurückkehren, auch wenn der Schließvorgang weiter aufrechterhalten wird.

Oder anders ausgedrückt, dass die bewegenden Kontakte in die offene Stellung zurückkehren und darin verharren, wenn das Öffnen der Kontakte nach dem Beginn des Schließens der Kontakte eingeleitet wird, auch dann, wenn der Vorgang des Schließens der Kontakte durch die Handhabe aufrechterhalten bleibt.

Dies hat den besonderen Vorteil, dass eine erhöhte Betriebssicherheit im Niederspannungsstromkreis erreicht wird. Beim Zuschalten auf einen nicht erkannten (nicht bekannten) Kurzschluss betätigt der Benutzer die Handhabe der mechanischen Trennkontakteinheit und möchte so die Kontakte schließen. Die Kontakte müssen bei einem Kurzschluss allerdings öffnen, was der Bedienrichtung (dem Schließen der Kontakte durch den Bediener) entgegensteht. Nur das (schnelle) Öffnen der Kontakte entgegen der Bedienrichtung verhindert einen größeren Fehler. Erfindungsgemäß ist beim Schließen der Kontakte durch die Handhabe die elektronische Unterbrechungseinheit noch hochohmig, so dass ein Fehler vermieden wird.

Erfindungsgemäß wird ein korrespondierendes Verfahren für ein Schutzschaltgerät für einen Niederspannungsstromkreis mit elektronischen (halbleiterbasierten) Schaltelementen mit den gleichen und weiteren Vorteilen beansprucht.

Das Verfahren für ein Schutzschaltgerät zum Schutz eines elektrischen Niederspannungsstromkreis, bei dem:
- netzseitige und lastseitige Anschlüssen für Leiter des Niederspannungsstromkreises vorgesehen sind,
- eine mechanische Trennkontakteinheit mit einem geschlossenen Zustand der Kontakte für einen Stromfluss im Niederspannungsstromkreis oder einen geöffneten Zustand der Kontakte für eine stromflussvermeidende galvanische Trennung im Niederspannungsstromkreis vorgesehen ist,
- eine elektronische Unterbrechungseinheit vorgesehen ist, die stromkreisseitig in Serie zur mechanischen Trennkontakteinheit geschaltet ist und die durch halbleiterbasierte Schaltelemente einen hochohmigen Zustand der Schaltelemente zur Vermeidung eines Stromflusses oder einen niederohmigen Zustand der Schaltelemente zum Stromfluss im Niederspannungsstromkreis aufweist,
- dass die Höhe des Stromes des Niederspannungsstromkreises ermittelt wird und bei Überschreitung von Stromgrenzwerten oder Strom-Zeitgrenzwerten eine Vermeidung eines Stromflusses im Niederspannungsstromkreis initiiert wird,
- dass nach einer Vermeidung eines Stromflusses durch einen hochohmigen Zustand der Schaltelemente der elektronischen Unterbrechungseinheit und geschlossenem Zustand der Kontakte eine Prüfung auf mindestens einen elektrischen Parameter an mindestens einem lastseitigen Anschluss erfolgt.

In vorteilhaften Ausgestaltungen des Verfahrens kann einer oder mehrere der genannten Punkte vorgesehen sein:
- die Prüfung so lange durchgeführt werden, bis der elektrische Parameter im Sollbereich liegt und bei im Sollbereich liegenden elektrischen Parameter wechselt die elektronische Unterbrechungseinheit in den niederohmigen Zustand.
- die Prüfung so lange durchgeführt werden, bis der elektrische Parameter größer als ein minimaler Sollwert ist, wobei der Sollbereich durch einen Sollwert gekennzeichnet ist.
- bei im Sollbereich liegenden elektrischen Parameter die elektronische Unterbrechungseinheit erst dann in den niederohmigen Zustand wechselt, wenn der elektrische Paramater für einen ersten Zeitbereich (beginnend von 1 ms oder 10 ms oder 100ms oder 1s; bis 10 ms oder 100 ms oder 1s oder 10 s; insbesondere 10 ms bis 100 ms oder bis 200 ms, oder bis 1 s, oder bis 10s) im Sollbereich liegt.
- bei im Sollbereich liegenden elektrischen Parameter die elektronische Unterbrechungseinheit erst dann in den niederohmigen Zustand wechselt, wenn eine Quittierung erfolgt.
- erfolgt die Prüfung auf mindestens einen elektrischen Parameter nach Überschreitung des Stromgrenzwertes oder Strom-Zeitgrenzwertes innerhalb einer ersten Zeitspanne. Diese ist insbesondere kleiner als 200 ms, 100 ms, 50ms, 30ms, 20 ms oder 10 ms.
- nach Ablauf der ersten Zeitspanne werden die Kontakte der mechanischen Trennkontakteinheit geöffnet, wenn mindestens ein elektrischer Parameter außerhalb seines Sollbereichs liegt.
- die Prüfung auf mindestens einen elektrischen Parameter an mindestens einem lastseitigen Anschluss erfolgt durch niederohmig werden mindestes eines Schaltelementes, insbesondere zweier oder aller Schaltelemente, der elektronischen Unterbrechungseinheit.
- die Prüfung auf mindestens einen elektrischen Parameter an mindestens einem lastseitigen Anschluss durch niederohmig werden der Schaltelemente der elektronischen Unterbrechungseinheit erfolgt bei einem betragsmäßigen Momentanwert der Spannung, der kleiner als ein erster Spannungsschwellwert ist.
- werden die Schaltelemente bei einem betragsmäßigen Momentanwert der Spannung, der größer als der erste Spannungsschwellwert ist, wieder hochohmig (Insbesondere ist der erste Spannungsschwellwert der für die (Schutz-)Kleinspannung).
- erfolgt die Prüfung auf mindestens einen elektrischen Parameter an den lastseitigen Anschlüssen durch Anlegen einer Hilfsspannung, insbesondere Gleichspannung, die kleiner als eine erste Spannungsgrenze ist.
- erfolgt die Prüfung, insbesondere nach Ablauf der ersten Zeitspanne, mit einem ersten zeitlichen Abstand.
- wechselt nach Ablauf einer ersten Zeitgrenze die mechanische Trennkontakteinheit (MK) in einen geöffneten Zustand der Trennkontakte.

Erfindungsgemäß wird ein korrespondierendes Computerprogrammprodukt für ein Schutzschaltgerät beansprucht. Das Computerprogrammprodukt umfass Befehle, die bei der Ausführung des Programms durch einen Mikrocontroller diesen veranlassen nach einer Vermeidung eines Stromflusses durch einen hochohmigen Zustand der Schaltelemente der elektronischen Unterbrechungseinheit und geschlossenem Zustand der Kontakte eine Prüfung auf mindestens einen elektrischen Parameter an mindestens einem lastseitigen Anschluss gemäß einem der Patentansprüche 1 bis 16 durchzuführen. Der Mikrocontroller ist Teil des Schutzschaltgerätes, insbesondere der Steuerungseinheit.

Erfindungsgemäß wird ein korrespondierendes computerlesbares Speichermedium, auf dem das Computerprogrammprodukt gespeichert ist, beansprucht.

Erfindungsgemäß wird ein korrespondierendes Datenträgersignal, das das Computerprogrammprodukt überträgt, beansprucht.

Alle Ausgestaltungen, sowohl in abhängiger Form rückbezogen auf den Patentanspruch 1 bzw. 17, als auch rückbezogen lediglich auf einzelne Merkmale oder Merkmalskombinationen von Patentansprüchen, insbesondere auch ein Rückbezug der anhängigen Anordnungsansprüche auf den unabhängigen Verfahrensanspruch, bewirken eine Verbesserung eines Schutzschaltgerätes, insbesondere eine Verbesserung der Sicherheit eines Schutzschaltgerätes, und stellen eine neues sicheres Konzept für ein Schutzschaltgerät bereit.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Zeichnung näher erläutert werden.

Dabei zeigt die Zeichnung:
Figur 1 eine erste Darstellung eines Schutzschaltgerätes,
Figur 2 eine zweite Darstellung eines Schutzschaltgerätes,
Figur 3 eine dritte Darstellung eines Schutzschaltgerätes,
Figuren 4 bis 9 zeitliche Abläufe zur Erläuterung der Erfindung.

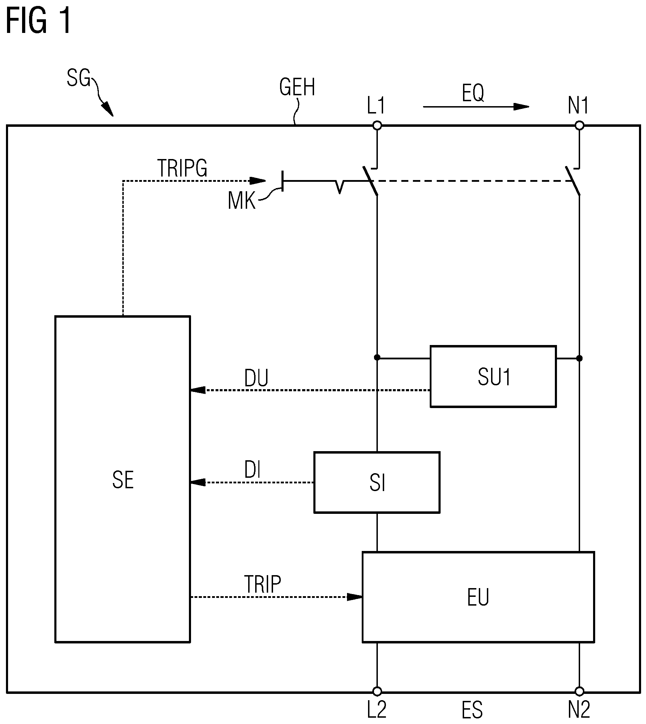

Figur 1 zeigt eine Darstellung eines Schutzschaltgerätes SG zum Schutz eines elektrischen Niederspannungsstromkreises mit einem Gehäuse GEH, aufweisend:
- Anschlüsse für Leiter des Niederspannungsstromkreises, insbesondere erste netzseitige Anschlüsse L1, N1 für eine netzseitigen, insbesondere energiequellenseitigen, Anschluss EQ des Schutzschaltgerätes SG und zweite lastseitige Anschlüsse L2, N2 für einen lastseitigen, insbesondere energiesenkenseitigen - im Falle passiver Lasten, Anschluss ES (verbraucherseitigen Anschluss) des Schutzschaltgerätes SG, wobei speziell phasenleiterseitige Anschlüsse L1, L2 und neutralleiterseitige Anschlüsse N1, N2 vorgesehen sein können;

der lastseitige Anschluss L2, N2 kann eine passive Last (Verbraucher) oder/und eine aktive Last ((weitere) Energiequelle) aufweisen, bzw. eine Last, die sowohl passiv als auch aktiv sein kann, **z.B.** in zeitlicher Abfolge;
   - eine erste Spannungssensoreinheit SU1, zur Ermittlung der Höhe der Spannung des Niederspannungsstromkreises, so dass insbesondere momentane (phasenwinkelbezogene) Spannungswerte DU vorliegen,
   - eine Stromsensoreinheit SI, zur Ermittlung der Höhe des Stromes des Niederspannungsstromkreises, derart das insbesondere momentane (phasenwinkelbezogene) Stromwerte DI vorliegen,
   - eine, insbesondere durch eine mechanische Handhabe bedienbare und schaltbare, mechanische Trennkontakteinheit MK, so dass ein Öffnen von Kontakten zur Vermeidung eines Stromflusses oder ein Schließen der Kontakte für einen Stromfluss im Niederspannungsstromkreis (durch die Handhabe) schaltbar ist, damit ist (insbesondere) eine galvanische Trennung im Niederspannungsstromkreis schaltbar;
bei der mechanischen Trennkontakteinheit MK wird ein Öffnen von Kontakten auch als Freischalten und ein Schließen von Kontakten als Zuschalten bezeichnet;
   - eine elektronische Unterbrechungseinheit EU, die stromkreisseitig in Serie zur mechanischen Trennkontakteinheit geschaltet ist und die durch halbleiterbasierte Schaltelemente einen hochohmigen Zustand der Schaltelemente zur Vermeidung eines Stromflusses und einen niederohmigen Zustand der Schaltelemente zum Stromfluss im Niederspannungsstromkreis aufweist;
bei der elektronische Unterbrechungseinheit EU wird ein hochohmiger Zustand der Schaltelemente (zur Vermeidung eines Stromflusses) auch als ausgeschalteter Zustand (Vorgang: Ausschalten) und ein niederohmiger (leitender) Zustand der Schaltelemente (zum Stromfluss) als eingeschalter Zustand (Vorgang: Einschalten) bezeichnet;
   - eine Steuerungseinheit SE, die mit der ersten Spannungssensoreinheit SU, der Stromsensoreinheit SI, der mechanischen Trennkontakteinheit MK und der elektronischen Unterbrechungseinheit EU verbunden ist, wobei bei Überschreitung von Stromgrenzwerten oder Strom-Zeitgrenzwerten (d.h. wenn ein Stromgrenzwert für eine bestimmte Zeitspanne überschritten wird) eine Vermeidung eines Stromflusses des Niederspannungsstromkreises initiiert wird, insbesondere um einen Kurzschlussstrom zu vermeiden.

Die netzseitigen Anschlüsse L1, N1 sind im Beispiel gemäß Figur 1 einerseits mit der mechanische Trennkontakteinheit MK verbunden. Die mechanische Trennkontakteinheit MK ist andererseits mit der elektronischen Unterbrechungseinheit EU verbunden. Die elektronischen Unterbrechungseinheit EU ist andererseits mit den lastseitigen Anschlüssen L2, N2 verbunden.

In einer alternativen Variante ist die mechanische Trennkontakteinheit MK zwischen der elektronischen Unterbrechungseinheit EU und den lastseitigen Anschlüssen L2, N2 angeordnet.

Die Spannungsmessung SU1 und die Strommessung sind den netzseitigen Anschlüssen L1, N2 zugeordnet und die elektronische Unterbrechungseinheit EU mit den netzseitigen Anschlüsse L1, N1 verbunden.

Allgemein ist die mechanische Trennkontakteinheit MK in Serie mit der elektronischen Unterbrechungseinheit EU geschaltet. In der alternativen Variante ist die mechanische Trennkontakteinheit MK den lastseitigen Anschlüssen und die elektronischen Unterbrechungseinheit EU den netzseitigen Anschlüssen zugeordnet.

In dieser alternativen Variante ist ein Netzteil zur Energieversorgung dann vorteilhaft (direkt) mit den netzseitigen Anschlüssen verbunden, so dass es ständig mit Energie von den netzseitigen Anschlüssen und der dort üblicherweise vorhandenen Energiequelle EQ versorgt wird.

Die erste Spannungssensoreinheit SU1 und die Stromsensoreinheit SI sind zwischen mechanischer Trennkontakteinheit MK und elektronischer Unterbrechungseinheit EU angeordnet.

Eine dritte Spannungssensoreinheit SU3 kann zwischen elektronischer Unterbrechungseinheit EU und den lastseitigen Anschlüssen L2, N2 angeordnet sein (in Figur 1 nicht eingezeichnet).

Das Schutzschaltgerät SG kann eine Energieversorgung mit einem Netzteil NT aufweisen (in Figur 1 nicht eingezeichnet). Das Netzteil NT ist einerseits mit den Leitern des Niederspannungsstromkreises verbunden, bevorzugt mit den Leitern zwischen mechanischen Trennkontaktsystem MK und elektronischer Unterbrechungseinheit EU. Das Netzteil NT dient andererseits zur Energieversorgung der Steuerungseinheit SE oder/und der elektronischen Unterbrechungseinheit EU sowie gegebenenfalls des ersten (oder/und zweiten) Spannungssensors SU oder/und Stromsensors SI.

Das Schutzschaltgerät SG, insbesondere die Steuerungseinheit SE, kann einem Mikrocontroller (= Mikroprozessor) aufweisen, auf dem ein Computerprogrammprodukt läuft, umfassend Befehle, die bei der Ausführung des Programms durch den Mikrocontroller diesen veranlassen eine Prüfung (wie vorstehend und nachfolgend beschrieben) für ein Schutzschaltgerät durchzuführen.

Das Computerprogrammprodukt kann vorteilhaft auf einem computerlesbaren Speichermedium; wie ein USB-Stick, CD-ROM, etc.; gespeichert sein, um z.B. ein Upgrade auf eine erweiterte Version zu ermöglichen.

Das Computerprogrammprodukt kann alternativ auch vorteilhaft durch ein Datenträgersignal übertragen werden.

Die Steuerungseinheit SE kann:
* mit einer digitalen Schaltung, z.B. mit einem (weiteren) Mikroprozessor, realisiert sein; der (weitere) Mikroprozessor kann auch einen Analog-Teil enthalten;
* mit einer digitalen Schaltung mit analogen Schaltungsteilen realisiert sein.

Das Schutzschaltgerät SG, insbesondere die Steuerungseinheit SE, ist derart ausgestaltet, dass bei Überschreitung von Stromgrenzwerten oder Strom-Zeitgrenzwerten (d.h. wenn ein Stromgrenzwert für eine bestimmte Zeit überschritten wird) eine Vermeidung eines Stromflusses des Niederspannungsstromkreises initiiert wird, insbesondere um einen Kurzschlussstrom zu vermeiden. Dies wird insbesondere dadurch erreicht, dass die elektronische Unterbrechungseinheit EU vom niederohmigen Zustand in den hochohmigen Zustand wechselt. Die Initiierung der Vermeidung eines Stromflusses des Niederspannungsstromkreises erfolgt beispielsweise durch ein erstes Unterbrechungssignal TRIP, dass von der Steuerungseinheit SE an die elektronische Unterbrechungseinheit EU gesendet wird, wie in Figur 1 eingezeichnet.

Die elektronische Unterbrechungseinheit EU ist gemäß Figur 1 als Block in beiden Leitern eingezeichnet. Damit ist in einer ersten Variante keine Unterbrechung beider Leiter gemeint. Mindestens ein Leiter, insbesondere der aktive Leiter respektive Phasenleiter, weist halbleiterbasierte Schaltelemente auf. Der Neutralleiter kann schaltelementefrei sein, d.h. ohne halbleiterbasierte Schaltelemente. D.h. der Neutralleiter ist direkt verbunden, d.h. wird nicht hochohmig. D.h. es erfolgt nur eine einpolige Unterbrechung (des Phasenleiters). Sind weitere aktive Leiter / Phasenleiter vorgesehen, weisen in einer zweiten Variante der elektronischen Unterbrechungseinheit EU die Phasenleiter halbleiterbasierten Schaltelemente auf. Der Neutralleiter ist direkt verbunden, d.h. wird nicht hochohmig. Beispielsweise für einen Dreiphasen-Wechselstromkreis.

In einer dritten Variante der elektronischen Unterbrechungseinheit EU kann der Neutralleiter ebenfalls ein halbleiterbasiertes Schaltelement aufweisen, d.h. bei einer Unterbrechung der elektronischen Unterbrechungseinheit EU werden beide Leiter hochohmig.

Die elektronische Unterbrechungseinheit EU kann Halbleiterbauelemente wie Bipolartransistoren, Feldeffekttransistoren (FET), Isolated Gate Bipolartransistoren (IGBT), Metall Oxid Schicht Feldeffekttransistoren (MOSFET) oder andere (selbstgeführte) Leistungshalbleiter aufweisen. Insbesondere IGBT's und MOSFET's eignen sich auf Grund geringer Durchflusswiderstände, hoher Sperrschichtwiderstände und eines guten Schaltverhaltens besonderes gut für das erfindungsgemäße Schutzschaltgerät.

Die mechanische Trennkontakteinheit MK kann in einer ersten Variante einpolig unterbrechen. D.h. es wird nur ein Leiter der beiden Leiter, insbesondere der aktive Leiter respektive Phasenleiter unterbrochen, d.h. weist einen mechanischen Kontakt auf. Der Neutralleiter ist dann kontaktfrei, d.h. der Neutralleiter ist direkt verbunden.

Sind weitere aktive Leiter / Phasenleiter vorgesehen, weisen in einer zweiten Variante die Phasenleiter mechanische Kontakte des mechanischen Trennkontaktsystems auf. Der Neutralleiter ist in dieser zweiten Variante direkt verbunden. Beispielsweise für einen Dreiphasen-Wechselstromkreis.

In einer dritten Variante des mechanischen Trennkontaktsystem MK weist der Neutralleiter ebenfalls mechanische Kontakte auf, wie in Figur 1 eingezeichnet.

Mit mechanischer Trennkontakteinheit MK ist insbesondere eine (normgerechte) Trennfunktion gemeint, realisiert durch die Trennkontakteinheit MK. Mit Trennfunktion sind die Punkte:
- Mindestluftstrecke nach Norm (Mindestabstand der Kontakte),
- Kontaktstellungsanzeige der Kontakte des mechanischen Trennkontaktsystem,
- Öffnen des mechanischen Trennkontaktsystem ist immer möglich (keine Blockierung des Trennkontaktsystems - insbesondere durch die Handhabe, Freiauslösung),
   gemeint.

Hinsichtlich der Mindestluftstrecke zwischen den Kontakten des Trennkontaktsystem ist diese im Wesentlichen spannungsabhängig. Weitere Parameter sind der Verschmutzungsgrad, die Art des Feldes (homogen, inhomogen), und der Luftdruck bzw. die Höhe über Normalnull.

Für diese Mindestluftstrecken bzw. Kriechstrecken gibt es entsprechende Vorschriften bzw. Normen. Diese Vorschriften geben beispielsweise bei Luft für eine Stoßspannungsfestigkeit die Mindestluftstrecke für ein inhomogenes und ein homogenes (ideales) elektrisches Feld in Abhängigkeit vom Verschmutzungsgrad an. Die Stoßspannungsfestigkeit ist die Festigkeit beim Anlegen einer entsprechenden Stoßspannung. Nur bei Vorliegen dieser Mindestlänge (Mindeststrecke) weist das Trennkontaktsystem bzw. Schutzschaltgerät eine Trennfunktion (Trennereigenschaft) auf.

Im Sinne der Erfindung sind hierbei für die Trennerfunktion und deren Eigenschaften die Normenreihe DIN EN 60947 bzw. IEC 60947 einschlägig, auf die hier durch Referenz Bezug genommen wird.

Das Trennkontaktsystem ist vorteilhafterweise durch eine Mindestluftstrecke der geöffneten Trennkontakte in der AUS-Stellung (Geöffnet Stellung, geöffnete Kontakte) in Abhängigkeit von der Bemessungsstoßspannungsfestigkeit und dem Verschmutzungsgrad gekennzeichnet. Die Mindestluftstrecke beträgt insbesondere zwischen (im Minimum) 0,01 mm und 14 mm. Insbesondere beträgt vorteilhafterweise die Mindestluftstrecke zwischen 0,01 mm bei 0,33 kV und 14 mm bei 12 kV, insbesondere für Verschmutzungsgrad 1 sowie insbesondere für inhomogene Felder.

Die Verschmutzungsgrade und Feldarten entsprechen den in den Normen definierten. Dadurch lässt vorteilhafterweise ein entsprechend der Bemessungsstoßspannungsfestigkeit dimensioniertes normgerechtes Schutzschaltgerät erzielen.

Die mechanische Trennkontakteinheit MK kann alternativ oder zusätzlich durch die Steuerungseinheit SE angesteuert werden, um bei Überschreitung von Stromgrenzwerten oder Strom-Zeit-grenzwerten eine Vermeidung eines Stromflusses des Niederspannungsstromkreises zu initiieren. Speziell wird hierbei ggfs. eine galvanische Trennung herbeiführt. Die Initiierung der Vermeidung eines Stromflusses bzw. eine ggfs. galvanischen Unterbrechung des Niederspannungsstromkreises erfolgt beispielsweise durch ein zweites Unterbrechungssignal TRIPG, dass von der Steuerungseinheit SE zum mechanisches Trennkontaktsystem MK gesendet wird, wie in Figur 1 eingezeichnet.

In einer vorteilhaften Ausgestaltung kann bei einer ermittelten Stromhöhe, die den zweiten Stromschwellwert überschreitet, eine Unterbrechung des Niederspannungsstromkreises initiiert werden, insbesondere durch die mechanische Trennkontakteinheit MK.

Der zweite Stromschwellwert entspricht beispielsweise den normgemäßen Strom-(Zeit-)Grenzwerten, d.h. den I-(t-)Kennlinien für Schutzgeräte, beispielsweise gemäß Norm IEC 60947 oder IEC 60898. Die gewählten Strom-(Zeit-)Grenzwerte wählt der Fachmann gemäß der vorliegenden Anwendung / Applikation.

Analog kann ein dritter Stromschwellwert beispielsweise gemäß normgemäßen Strom-Zeit-Grenzwerten gewählt werden, d.h. den I-t-Kennlinien für Schutzgeräte, beispielsweise gemäß Norm IEC 60947 oder IEC 60898. Die gewählten Strom-Zeit-Grenzwerte wählt der Fachmann gemäß der vorliegenden Anwendung / Applikation.

Das Schutzschaltgerät SG ist beispielsweise derart ausgestaltet, dass die elektronische Unterbrechungseinheit EU im freigeschalteten Zustand, d.h. wenn die Kontakte der mechanische Trennkontakteinheit MK geöffnet sind, hochohmig ist.

Bedient ein Benutzer des Schutzschaltgerätes SG die mechanische Handhabe für einen Einschaltvorgang, um die Kontakte zu schließen, wird, insbesondere nach Schließen der Kontakte (d.h. Zuschalten), eine Überprüfungsfunktion ausgeführt. Liefert die Überprüfungsfunktion ein positives Ergebnis, wird die elektronische Unterbrechungseinheit EU niederohmig. Andernfalls nicht.

D.h. die elektronische Unterbrechungseinheit EU wird erst dann niederohmig, wenn die Überprüfungsfunktion einen niederohmigen Zustand der Schaltelemente zulässt.

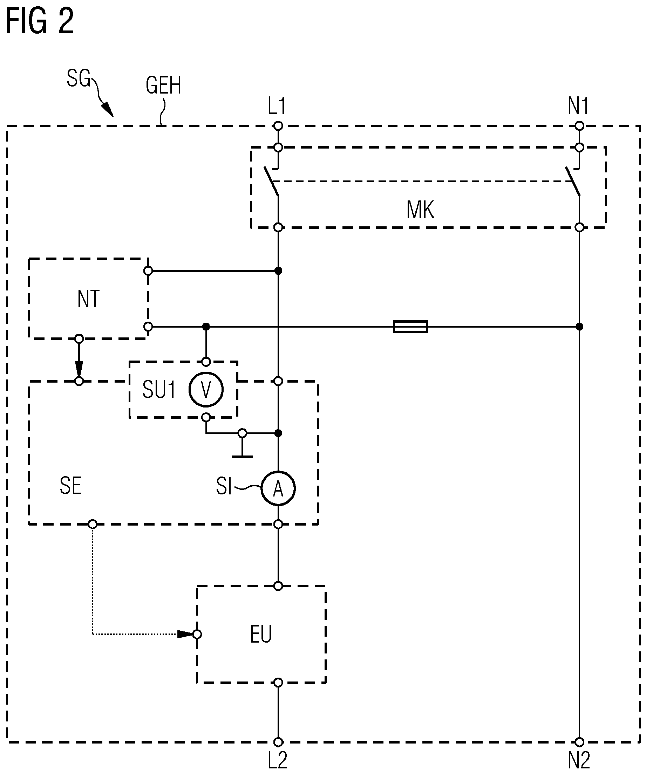

Figur 2 zeigt eine Darstellung eines Schutzschaltgerätes SG gemäß Figur 1, mit dem Unterschied, dass:
die elektronische Unterbrechungseinheit EU als einpolig unterbrechende Einheit ausgestaltet ist,
die mechanische Trennkontakteinheit MK als zweipolig unterbrechende Einheit ausgestaltet ist (galvanisch unterbrechend),
ein Netzteil NT vorgesehen ist, dass zwischen mechanischer Trennkontakteinheit MK und elektronischer Unterbrechungseinheit EU angeschlossen ist,
das Netzteil NT die Steuerungseinheit SE mit Energie versorgt (durch einen Pfeil angedeutet).

Das Schutzschaltgeräte kann als hutschienenmontierbares Schutzschaltgerät SG mit einer Breite von z.B. 1 TE, 1,5 TE bzw. 2 TE mit zweipoligen Anschlüssen (L, N) ausgestaltet sein. In der Elektroinstallation und im Schaltschrankbau wird die Breite von Einbaugeräten wie Schutzschaltgeräten, Leitungsschutzschaltern, Fehlerstrom-Schutzschaltern usw. in Teilungseinheiten, kurz TE, angegeben. Die Breite einer Teilungseinheit beträgt ~18 mm. Die Einbaubreite der Geräte soll nach der Norm DIN 43880: 1988-12 zwischen 17,5 und 18,0 mm liegen, oder sich aus der Multiplikation dieser Abmessung mit 0,5 oder einem ganzzahligen Vielfachen davon errechnen, also: k x 0,5 x 18 mm oder k x 0,5 x 17,5 mm (mit k = 1, 2, 3, ...). So hat zum Beispiel ein einpoliger Leitungsschutzschalter gemäß dem Stand der Technik eine Breite von 1 TE. Die Einbauten von Elektroinstallationsverteilern sind nach DIN 43871 "Installationskleinverteiler für Einbaugeräte bis 63 A" auf die Teilungseinheiten abgestimmt, z. B. die Breite von Tragschienen/Hutschienen.

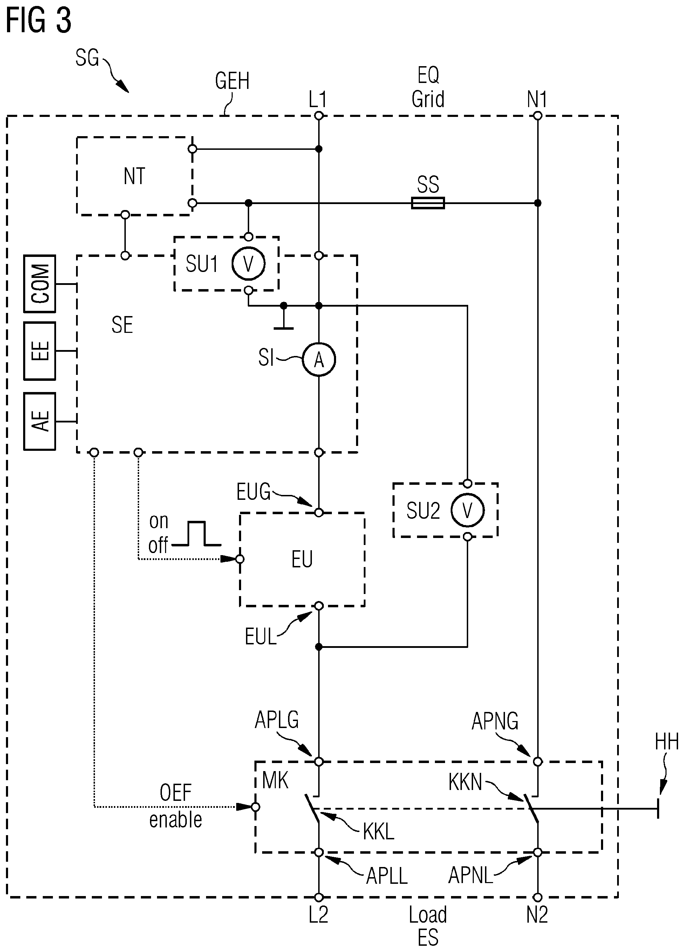

Figur 3 zeigt eine Darstellung eines Schutzschaltgerätes SG gemäß Figur 1 und 2, mit den nachfolgenden Unterschieden. Dass:
- die netzseitige Anschlüssen L1, N1 bzw. die Netzseite EQ ferner mit dem Bezugszeichen GRID gekennzeichnet ist,
- die lastseitige Anschlüssen L2, N3 bzw. die Lastseite ES ferner mit dem Bezugszeichen LOAD gekennzeichnet ist,
- die (zweipolige) mechanische Trennkontakteinheit MK lastseitige Anschlusspunkten APLL, APNL und netzseitigen Anschlusspunkten APLG, APNG aufweist,

wobei für den Neutralleiter ein lastseitiger Anschlusspunkt APNL, für den Phasenleiter ein lastseitiger Anschlusspunkt APLL, für den Neutralleiter ein netzseitiger Anschlusspunkt APNG, für den Phasenleiter ein netzseitiger Anschlusspunkt APLG vorgesehen ist. Die lastseitigen Anschlusspunkte APNL, APLL sind mit den lastseitigen Neutral- und Phasenleiteranschlüssen N2, L2 verbunden, so dass ein Öffnen von Kontakten KKN, KKL zur Vermeidung eines Stromflusses oder ein Schließen der Kontakte für einen Stromfluss im Niederspannungsstromkreis schaltbar ist,
   - eine, insbesondere einpolige, elektronische Unterbrechungseinheit EU, (die bei einpoliger Ausführung insbesondere im Phasenleiter angeordnet ist,)
mit einem netzseitigen Verbindungspunkt EUG, der mit dem netzseitigen Phasenleiteranschluss L1 in elektrischer Verbindung steht, und
einem lastseitigen Verbindungspunkt EUL, der mit dem netzseitigen Anschlusspunkt APLG der mechanischen Trennkontakteinheit MK in elektrischer Verbindung steht bzw. verbunden ist, wobei die elektronische Unterbrechungseinheit EU durch (nicht dargestellte) halbleiterbasierte Schaltelemente einen hochohmigen Zustand der Schaltelemente zur Vermeidung eines Stromflusses oder einen niederohmigen Zustand der Schaltelemente zum Stromfluss im Niederspannungsstromkreis aufweist bzw. schaltbar ist,
   - die Steuerungseinheit SE ist mit der Stromsensoreinheit SI, der mechanischen Trennkontakteinheit MK und der elektronischen Unterbrechungseinheit EU verbunden.

Die die mechanische Trennkontakte Einheit MK ist lastseitig angeordnet, die elektronische Unterbrechungseinheit EU ist netzseitig angeordnet.

Die Netzseite GRID mit der Energiequelle steht im Normalfall unter elektrischer Spannung. An der Lastseite LOAD ist üblicherweise ein elektrischer Verbraucher angeschlossen.

Das Schutzschaltgerät SG kann derart ausgestaltet sein, dass vorteilhaft die Höhe der Spannung über der elektronischen Unterbrechungseinheit ermittelbar ist. D.h. die Höhe einer ersten Spannung zwischen netzseitigen Verbindungspunkt EUG und lastseitigen Verbindungspunkt EUL der elektronischen Unterbrechungseinheit EU ist ermittelbar bzw. wird ermittelt. Hierzu kann im Beispiel gemäß Figur 3 eine mit der Steuerungseinheit SE verbundene zweite Spannungssensoreinheit SU2 vorgesehen sein, die die Höhe der Spannung zwischen netzseitigen Verbindungspunkt EUG und lastseitigen Verbindungspunkt EUL der elektronischen Unterbrechungseinheit EU ermittelt. Bei der Spannungsmessung durch die zweite Spannungssensoreinheit SU2 kann alternativ auch die Spannung über der Serienschaltung von elektronischer Unterbrechungseinheit EU und Stromsensor SI ermittelt werden, wie in Figur 3 dargestellt. Die Stromsensoreinheit SI weist einen sehr geringen Innenwiderstand auf, so dass die Ermittlung der Höhe der Spannung nicht oder vernachlässigbar beeinträchtigt wird.

Vorteilhafterweise kann die erste Spannungssensoreinheit SU1 vorgesehen sein, die die Höhe der Spannung zwischen netzseitigen Neutralleiteranschluss NG und netzseitigen Phasenleiteranschluss LG ermittelt.

Im Beispiel gemäß Figur 3 ist die elektronische Unterbrechungseinheit EU einpolig ausgeführt, im Beispiel im Phasenleiter. Hierbei ist der netzseitige Anschlusspunkt APNG für den Neutralleiter der mechanischen Trennkontakteinheit MK mit den netzseitigen Neutralleiteranschluss NG des Gehäuses GEH verbunden.

Das Schutzschaltgerät SG ist vorteilhaft derart ausgestaltet, dass die Kontakte der mechanischen Trennkontakteinheit MK durch die Steuerungseinheit SE geöffnet, aber nicht geschlossen werden können, was durch einen Pfeil von der Steuerungseinheit SE zur mechanischen Trennkontakte Einheit MK angedeutet ist.

Das Schutzschaltgerät SG weist eine Energieversorgung bzw. Netzteil NT, beispielsweise ein Schaltnetzteil, auf. Insbesondere ist die Energieversorgung / Netzteil NT für die Steuerungseinheit SE vorgesehen, was durch eine Verbindung zwischen Energieversorgung / Netzteil NT und Steuerungseinheit SE in Figur 3 angedeutet ist. Die Energieversorgung / Netzteil NT ist (andererseits) mit dem netzseitigen Neutralleiteranschluss NG und dem netzseitigen Phasenleiteranschluss LG verbunden. In die Verbindung zum netzseitigen Neutralleiteranschluss NG (oder/und Phasenleiteranschluss LG) kann vorteilhaft eine Sicherung SS, insbesondere Schmelzsicherung, oder ein Schalter SCH (nicht eingezeichnet) vorgesehen sein. Das Netzteil NT ist erfindungsgemäß im Normalfall ständig mit Energie versorgt. Es ist ggfs. durch die Sicherung SS abgesichert bzw. kann durch den Schalter SCH abgeschaltet werden. Vorteilhafterweise kann der Schalter SCH / Sch so ausgeführt sein, dass der Schalter nur dann geöffnet werden kann, wenn sich die Kontakte im geöffneten Zustand befinden. Dies erhöht die Sicherheit des Gerätes, da die Elektronik (insbesondere die Steuerungseinheit) nicht bei geschlossenen Kontakten abgeschaltet werden kann.

Der Niederspannungsstromkreis kann ein Dreiphasenwechselstromkreis sein, mit einem Neutralleiter und drei Phasenleitern. Das Schutzschaltgerät kann hierfür als dreiphasige Variante ausgestaltet sein und beispielsweise weitere netzseitige und lastseitige Phasenleiteranschlüsse aufweisen. Zwischen den weiteren netzseitigen und lastseitigen Phasenleiteranschlüssen sind in analoger Weise jeweils erfindungsgemäße elektronische Unterbrechungseinheiten und Kontakte der mechanischen Trennkontakteinheit vorgesehen, ebenso Stromsensoreinheiten. Ferner können Spannungsermittlungen (z.B. durch erste Spannungssensoreinheiten) vorgesehen sein.

Mit hochohmig ist ein Zustand gemeint, bei dem nur noch ein Strom vernachlässigbarer Größe fließt. Insbesondere sind mit hochohmig Widerstandswerte von größer als 1 Kiloohm, besser größer als 10 Kiloohm, 100 Kiloohm, 1 Megaohm, 10 Megaohm, 100 Megaohm, 1 Gigaohm oder größer gemeint.

Mit niederohmig ist ein Zustand gemeint, bei dem der auf dem Schutzschaltgerät angegebene Stromwert fließen könnte. Insbesondere sind mit niederohmig Widerstandswerte gemeint, die kleiner als 10 Ohm, besser kleiner als 1 Ohm, 100 Milliohm, 10 Milliohm, 1 Milliohm oder kleiner sind.

Das Schutzschaltgerät kann eine Eingabeeinheit aufweisen, die auch bzw. zusätzlich als eine Kommunikationseinheit COM ausgeführt sein kann. Ferner kann die Eingabeeinheit eine Anzeigefunktion aufweisen. Ebenso kann eine separate Anzeigeeinheit vorgesehen sein.

Die Kommunikationseinheit COM kann insbesondere eine drahtlose Kommunikationseinheit sein.

Erfindungsgemäß ist das Schutzschaltgerät SG derart ausgestaltet, dass nach einer Vermeidung eines Stromflusses (z.B. bei Kurzschluss oder Überlast bzw. Überstrom, d.h. wenn auf der Lastseite der Widerstand beispielsweise kleiner 1 Ohm ist (Kurzschluss) oder auch wenn ein hoher Strom oder Stromanstieg (erste Ableitung des Stromes nach der Zeit) vorliegt; je nach Schutzschaltgerätetyp kann der Stromschwellwert (bei einem Stromanstieg ein Stromanstiegsschwellwert) beispielsweise ein n-facher Wert den Nennstromes des Schutzschaltgerätes sein)

durch einen hochohmigen Zustand der Schaltelemente der elektronischen Unterbrechungseinheit und geschlossenem Zustand der Kontakte eine Prüfung auf mindestens einen elektrischen Parameter an mindestens einem lastseitigen Anschluss (bzw. in einer Variante den lastseitigen Anschlüssen) erfolgt.

Dies kann durch die Steuerungseinheit SE erfolgen, beispielsweise durch den Mikrocontroller, auf dem beispielsweise ein Computerprogrammprodukt läuft, umfassend Befehle, die bei der Ausführung des Programms durch den Mikrocontroller diesen veranlassen die Prüfung durchzuführen.

Der mindestens eine elektrische Parameter ist insbesondere ein Widerstand, eine Kapazität, eine Induktivität bzw. eine Impedanz.

Der mindestens eine elektrische Parameter ist insbesondere ein Strom oder eine Spannung (im letzteren Fall ist eine Spannungssensoreinheit vorgesehen).

Der mindestens eine elektrische Parameter weist einen, insbesondere schutzschaltgerätabhängigen, Sollbereich auf. Die Prüfung kann so lange durchgeführt werden, bis der elektrische Parameter im Sollbereich liegt.

Der Sollbereich kann auch durch einen Sollwert gekennzeichnet sein. Die Prüfung wird so lange durchgeführt, bis der elektrische Parameter größer (oder gegebenenfalls kleiner) als ein Sollwert ist.

Beispielsweise tritt ein kurzzeitiger Kurzschluss auf, der einen hohen Kurzschlussstrom zur Folge hat, so dass ein Stromgrenzwert (z.B. auch Stromanstiegsgrenzwert) überschritten wird. Zur Vermeidung des Kurzschlussstromes wechseln die Schaltelemente der elektronischen Unterbrechungseinheit in den hochohmigen Zustand, wodurch der Stromfluss vermieden bzw. unterbrochen wird. Nun prüft das Schutzschaltgerät (nach der Vermeidung des Stromflusses) mindestens einen elektrischen Parameter an mindestens einem (bzw. beiden) lastseitigen Anschluss(en). Beispielsweise des elektrischen Widerstandes. Wenn der Widerstand wieder größer als ein Sollwert ist bzw. im Sollbereich liegt, beispielsweise bei einem 230 Volt Niederspannungsstromkreis und einem Nennstrom des Schutzschaltgerätes von 10 Ampere hinsichtlich eines Widerstandswertes von 23 Ohm als Sollwert, so kann, wenn der Widerstandswert größer als 23 Ohm ist (also im Sollbereich liegt), die elektronische Unterbrechungseinheit wieder in den niederohmigen Zustand wechseln und so die Energieversorgung wieder herstellen (beispielsweise mit dem Ziel, maximale Versorgungssicherheit). Liegt weiterhin ein Fehler vor, wird das Schutzschaltgerät den Stromfluss wieder vermeiden / unterbrechen. Der Sollbereich beinhaltet nicht nur den dauerhaften Nennstrom, sondern z.B. auch einen kurzzeitigen Überstrom, z.B. den 2 oder 3-fachen Nennstrom für z.B. eine Zeit von z.B. 10 Sekunden.

Die Prüfung kann so lange durchgeführt werden, bis der elektrische Parameter im Sollbereich SB liegt. (Bei im Sollbereich liegenden elektrischen Parameter wechselt die elektronische Unterbrechungseinheit in den niederohmigen Zustand.)

Es kann eine Prüfung hinsichtlich weiterer elektrischer Parameter durchgeführt werden. Nur wenn alle geprüften elektrischen Parameter im Sollbereich SB liegen, wechselt die elektronische Unterbrechungseinheit in den niederohmigen Zustand EUn.

Die Prüfung des mindestens einen elektrischen Parameters kann abhängig von dem den Stromfluss vermeidenden Ereignis sein, d.h. abhängig von dem den hochohmigen Zustand der elektronischen Unterbrechungseinheit herbeiführenden Ereignis.

Bei einem zu hohen Strom (als Ereignis), wie in einem Kurzschlussfall, beispielsweise auf einen elektrischen Widerstand oder die elektrische Impedanz (als elektrische Parameter). Bei einer Überspannung (als Ereignis) auf das weitere Vorliegen einer Überspannung (als elektrischer Parameter). Spezieller bei einem zu hohem Integrationswert des Stromes über der Zeit (Integral I dt), wie in einem Überlastfall, auf Strom bzw. elektrischen Widerstand oder die elektrische Impedanz (als elektrische Parameter).

Bei einem zu hohen Strom kann die Prüfung des mindestens einen elektrischen Parameters, im Beispiel auf den elektrischen Widerstand bzw. Impedanz, durch eine Messung bei einem Momentanwert der (Netz-)Spannung von kleiner 50 Volt erfolgen bzw. durchgeführt werden, beispielsweise durch kurzzeitiges Einschalten der elektronischen Unterbrechungseinheit bei entsprechenden Momentanwerten der (Netz-)Spannung.

Bei einer Überspannung (als Ereignis) kann die Prüfung auf das weitere Vorliegen der Überspannung durch reines Ermitteln der Höhe der Spannung, insbesondere ohne Schalthandlungen (schalthandlungsfrei) der elektronischen Unterbrechungseinheit erfolgen, speziell wenn die elektronischen Unterbrechungseinheit weiterhin im hochohmigen Zustand ist.

Bei einem zu hohem Integrationswert des Stromes über der Zeit (Integral I dt), wie in einem Überlastfall, kann die Prüfung des mindestens einen elektrischen Parameters, im Beispiel auf den Strom bzw. den elektrischen Widerstand bzw. Impedanz, durch eine Messung durchgeführt werden, beispielsweise durch Einschalten der elektronischen Unterbrechungseinheit (niederohmiger Zustand), beispielsweise durch Einschalten für mehrere Halbwellen oder Vollwellen (z.B. 1, 2, 3, 4 oder 5 Halb- oder Vollwellen oder länger) der elektrischen Spannung.

D.h. die Art der Prüfung des mindestens einen elektrischen Parameters ist abhängig von dem den hochohmigen Zustand der elektronischen Unterbrechungseinheit herbeiführenden Ereignisses. Weiterhin kann abhängig von dem den hochohmigen Zustand der elektronischen Unterbrechungseinheit herbeiführenden Ereignisses die Zeitpanne, der Zeitbereich, die Zeitgrenze und der zeitliche Abstand bestimmt oder einstellbar sein. (zeitliches nachfolgend)

Vorteilhaft kann bei im Sollbereich liegenden elektrischen Parameter die elektronische Unterbrechungseinheit erst dann in den niederohmigen Zustand EUn wechseln, wenn der elektrische Paramater für einen ersten Zeitbereich ZB1 im Sollbereich SB liegt. Beispielsweise kann der erste Zeitbereich je nach Anwendung einen Wert aus dem Bereich 10 ms bis 10 s aufweisen, spezieller 10 ms bis 100ms oder 100 ms bis 200ms oder 200ms bis 1s oder 1 s bis 10s. Ebenso ist ein Bereich ab 1 ms möglich.

Alternativ kann das Schutzschaltgerät SG eine Eingabeeinheit aufweisen. Die Eingabeeinheit kann Eingabeelemente am Gehäuse des Schutzschaltgerätes aufweisen. Die Eingabeeinheit kann auch oder zusätzlich eine leitungsgebundene (z.B. elektrisch, optisch) oder leitungslose (z.B. funk, optisch) Eingabemöglichkeit, beispielsweise durch eine Kommunikationseinheit, aufweisen. Die Eingabeeinheit kann auch eine Anzeigefunktion aufweisen.

Bei im Sollbereich liegenden elektrischen Parameter wechselt die elektronische Unterbrechungseinheit erst dann in den niederohmigen Zustand, wenn mittels der Eingabeeinheit eine Quittierung Q1 (durch eine Bedienperson, Nutzer) erfolgt, d.h. ein Wiederzuschalten der Energieversorgung nach dem hochohmigen Zustand erfolgen soll.

Die Prüfung auf mindestens einen elektrischen Parameter nach Überschreitung des Stromgrenzwertes oder Strom-Zeitgrenzwertes kann innerhalb einer ersten Zeitspanne ZS1 erfolgen. Die erste Zeitspanne kann insbesondere kleiner als 200 ms, 100 ms, 50ms, 30ms, 20 ms oder 10 ms sein. Nach Ablauf der ersten Zeitspanne ZS1 können die Kontakte der mechanischen Trennkontakteinheit MKo öffnen, wenn mindestens ein elektrischer Parameter außerhalb seines Sollbereichs liegt. So wird ein Verhalten gemäß einer Norm bereitgestellt, bei dem beispielsweise eine Unterbrechung erst nach z.B. 200 ms erfolgen muss. Vorher kann erfindungsgemäß weiter auf das Vorliegen der auslösenden Bedingung geprüft werden, ohne gegen die Norm zu verstoßen. So kann eine höhere Versorgungssicherheit, insbesondere bei unkritischen Fehlern, erreicht werden.

Erfindungsgemäß kann die Prüfung auf mindestens einen elektrischen Parameter an mindestens einem lastseitigen Anschluss durch (kurzzeitiges) niederohmig werden mindestes eines Schaltelementes, insbesondere zweier oder aller Schaltelemente, der elektronischen Unterbrechungseinheit erfolgt. Spezieller kann die Prüfung auf mindestens einen elektrischen Parameter an mindestens einem lastseitigen Anschluss durch niederohmig werden der Schaltelemente der elektronischen Unterbrechungseinheit bei einem betragsmäßigen Momentanwert der Spannung erfolgen, der kleiner als ein erster Spannungsschwellwert ist (bezüglich einer Wechselspannung). Beispielsweise kleiner als 120 V, insbesondere kleiner als 50 V (Effektivwert Wechselspannung). Die elektronische Unterbrechungseinheit kann kurzzeitig eingeschaltet werden, d.h. das halbleiterbasierte Schaltelement kurzzeitig niederohmig geschaltet wird. Mit kurzzeitig ist hierbei z.B. eine erste Einschaltdauer gemeint, bei der momentane Spannungswert u(t) der Wechselspannung einen bestimmten Wert, beispielsweise von 50 Volt (Grenze (Schutz-)Kleinspannung - mit einem Scheitelwert von 70 Volt), nicht überschreitet.

Wenn eine Wechselspannung mit Lücken ("lückende AC-Spannung") generiert wird, kann somit der Momentanwert größer als 50V sein. Erfindungsgemäß sollte dann der Effektivwert der Wechselspannung kleiner als der erste Spannungsschwellwert sein, z.B. kleiner als 50 Volt sein (bzw. nicht größer als 50V sein).

So kann beispielsweise zum Nulldurchgang der Wechselspannung (0°) für ca. 444 µs / bis 8° die Wechselspannung zugeschaltet werden (elektronische Unterbrechungseinheit EU niederohmig), d.h. bis der momentane Spannungswert maximal 50 Volt erreicht wird.

Alternativ kann auch bei ca. -8° (bezogen auf den Nulldurchgang der Wechselspannung) eingeschaltet werden, der Nulldurchgang durchlaufen werden und bei +8° wieder ausgeschaltet werden, also für ca. 888 µs. D.h. die erste Einschaltdauer ist kleiner als eine 1 ms, insbesondere kleiner als 0,9 ms, spezieller etwa 0,8 ms (oder jeweils die Hälfte, jeweils abhängig vom Einschaltzeitpunkt). So kann eine sichere Prüfung auf den mindestens einen elektrischen Parameter, insbesondere hinsichtlich des Widerstandes, einer Kapazität, Induktivität bzw. Impedanz an den lastseitigen Anschlüssen geprüft werden (Kurzschluss, Überlast, ... - bzw. deren charakteristische Werte von Widerstand, Kapazität, Induktivität bzw. Impedanz). Zur weiteren Sicherheit können die Schaltelemente bei einem betragsmäßigen Momentanwert der Spannung, der größer als der erste Spannungsschwellwert ist, wieder hochohmig werden. Erfindungsgemäß liegt somit keine gefährliche Spannung an den lastseitigen Anschlüssen an.

Alternativ kann die Prüfung auf mindestens einen elektrischen Parameter an den lastseitigen Anschlüssen durch Anlegen einer Hilfsspannung, insbesondere Gleichspannung, die kleiner als eine erste Spannungsgrenze ist, erfolgen. Die Höhe der ersten Spannungsgrenze kann ein (Grenz-)Wert im Bereich der (Schutz-)Kleinspannung sein bzw. dem Spannungsschwellwert entsprechen. Erfindungsgemäß liegt hier auch keine gefährliche Spannung an den lastseitigen Anschlüssen an. Als Schutzkleinspannung wird der Bereich der Niederspannung bezeichnet, welcher im Betrieb mit Wechselstrom unter 50 Volt, oder im Betrieb mit Gleichstrom (DC) unter 120 Volt liegt. Gegenwärtig wird diskutiert, die Grenze für die Schutzkleinspannung im Gleichstrom (DC) Betrieb auf 90 Volt herabzusenken. Ebenso sind Grenzen von 25 V Wechselspannung oder 60 V Gleichspannung möglich.

Alternativ kann die Prüfung auf mindestens einen elektrischen Parameter an mindestens einem lastseitigen Anschluss durch kurzzeitiges niederohmig werden mindestes eines Schaltelementes, insbesondere zweier oder aller Schaltelemente, der elektronischen Unterbrechungseinheit erfolgen. Spezieller kann die Prüfung auf mindestens einen elektrischen Parameter an mindestens einem lastseitigen Anschluss durch niederohmig werden der Schaltelemente der elektronischen Unterbrechungseinheit für eine erste Einschaltdauer ED1, sodass der an den Lastanschlüssen vorhandene Effektivwert der Spannung (ermittelt über eine Netzperiode) 50 V nicht überschreitet. Das heißt, dass der Momentanwert der Spannung kurzzeitig größer 50 V sein kann, jedoch der über eine Netzperiode ermittelte Effektivwert der Spannung kleiner ist als 50V. Die erste Einschaltdauer ist somit stets kleiner als 20 ms, spezieller kleiner als 10 ms, insbesondere kleiner als 1 ms.

Die Prüfung kann mit einem (konfigurierbaren) ersten zeitlichen Abstand ZA1 erfolgen. Der erste zeitliche Abstand ZA1 kann insbesondere 10 s, 30 s, 1, 5, 10 oder 15 Minuten sein. Jeder Zwischenwert ist möglich und offenbart. Spezieller nach Ablauf der ersten Zeitspanne ZS1. Nach Ablauf einer ersten Zeitgrenze ZG1 kann die mechanische Trennkontakteinheit MK in einen geöffneten Zustand der Trennkontakte wechseln. Die erste Zeitgrenze kann beispielsweise ein Wert wie: 15 min, 30 min, 1h, 8h, 24h, 36h oder 48h sein, Zwischenwerte sind ebenfalls möglich.

Hinsichtlich von:
- Sollbereich des mindestens einen elektrischen Parameters bzw. Sollwert,
- erste Zeitbereich,
- erste Zeitspanne,
- erste Spannungsschwellwert,
- erste Spannungsgrenze,
- erste zeitliche Abstand,
- erste Zeitgrenze,
- die Quittierung
kann mindestens ein, ein Teil oder alle über die Eingabeeinheit / Kommunikationseinheit einstellbar bzw. konfigurierbar sein.

Der Sollbereich des elektrischen Parameters entspricht dem zulässigen elektrischen Arbeitsbereich des Schutzschaltgerätes hinsichtlich dieses Parameters.

Beispielsweise kann die Prüfung an den lastseitigen Anschlüssen eine Prüfung mindestens eines, insbesondere mehrerer oder aller, der nachfolgenden Parameter umfassen:
- Überprüfung auf Überschreitung eines ersten Überspannungswertes oder/und höheren zweiten Überspannungswertes oder/und höheren dritten Überspannungswertes,
- Überprüfung auf Parameter des lastseitigen Anschlusses, insbesondere auf Unterschreitung eines lastseitigen ersten oder/und zweiten Widerstandeswertes oder lastseitigen ersten oder/und zweiten Impedanzwertes.

Die Überprüfung auf Überspannungswerte kann durch konkrete Messungen durch die dann vorgesehene erste Spannungssensoreinheit erfolgen. Die Grenzwerte können wie bereits dargestellt festgelegt werden.

Die Überprüfung auf Parameter des lastseitigen Anschlusses, insbesondere auf Unterschreitung eines lastseitigen ersten oder/und zweiten Widerstandeswertes oder lastseitigen ersten oder/und zweiten Impedanzwertes, können beispielsweise durch beschriebenes kurzzeitiges Einschalten(speziell: beschriebene Einschaltdauer, siehe oben) der elektronischen Unterbrechungseinheit und Messungen durch die Spannungs- und Stromsensoreinheit durchgeführt werden. Die ermittelten Werte werden mit festgelegten ersten bzw. zweiten Widerstands- bzw. Impedanzwerten (Sollbereich, Sollwert) verglichen.

Abhängig von der Implementierung der zu prüfenden Parameter, d.h. der vorhergehenden Implementierung, kann:
bei Überschreitung des ersten Überspannungswertes eine Überspannungsinformation abgegeben (Spannung zu hoch),
bei Überschreitung des zweiten Überspannungswertes erfolgt ein hochohmig werden der elektronischen Unterbrechungseinheit (Spannungshöhe kritisch),
bei Überschreitung des dritten Überspannungswertes erfolgt ein Öffnen der Kontakte (Freischalten) durch die mechanische Trennkontakteinheit (Spannungshöhe gefährlich (für den weiteren Betrieb des Gerätes)),
bei Unterschreitung des lastseitigen ersten Widerstandeswertes oder lastseitigen ersten Impedanzwertes wird eine Impedanzinformation abgegeben (niederohmiger Verbraucher - Überlast?), oder
bei Unterschreitung des lastseitigen zweiten Widerstandeswertes oder lastseitigen zweiten Impedanzwertes bleibt die elektronische Unterbrechungseinheit hochohmig (Kurzschluss auf Lastseite).

So können abgestuft definierte Maßnahmen - Warnung - hochohmig bleiben - galvanische Trennung - durchgeführt werden, gekoppelt bzw. durchgeführt mittels der Prüfung, abhängig vom Über- bzw. Unterschreiten bestimmter definierter Paramater, was die Betriebssicherheit bzw. Versorgungssicherheit im Niederspannungsstromkreis erhöht. Vorteilhaft wird die Prüfung, bei geschlossenen Kontakten / Zuschaltung kontinuierlich durchgeführt. Liegen die Parameter im vorgesehenen Bereich, d.h. keine Über- oder Unterschreitungen, kann ein einschalten erfolgen (niederohmige Schaltelemente).

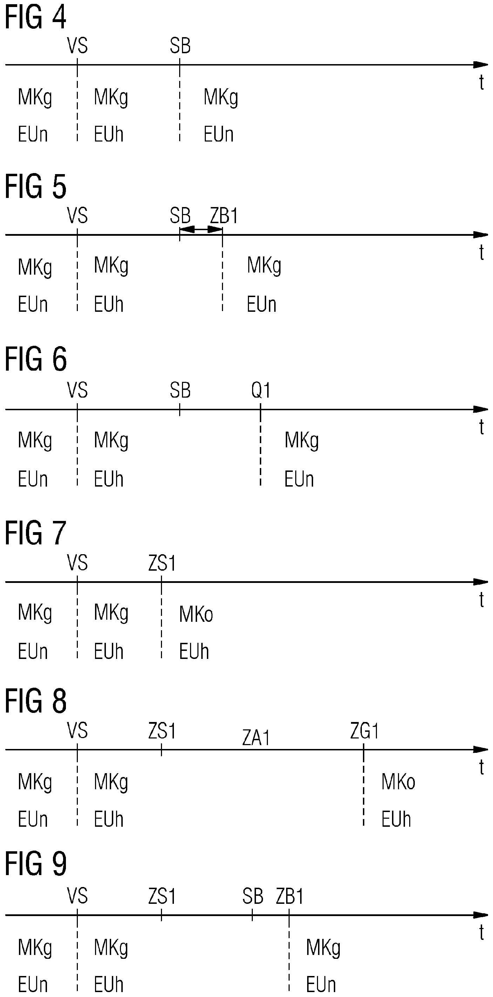

In den Figuren 4 bis 9 ist beispielhaft ein Teil der vorstehend genannten Zeitabläufe dargestellt. Die Figuren 4 bis 9 zeigen je einen Zeitstrahl t, auf dem bestimmte, vorstehend genannte, Zeitpunkte eingetragen sind, ferner Zustände der mechanischen Trennkontakteinheit MK und der elektronischen Unterbrechungseinheit EU.

Figur 4 zeigt den Zeitpunkt einer Vermeidung eines Stromflusses VS, hervorgerufen beispielsweise durch Überschreitung von Stromgrenzwerten oder Strom-Zeitgrenzwerten. Vor dem Zeitpunkt der Vermeidung des Stromflusses VS ist die mechanische Trennkontakteinheit MK in einem geschlossenen Zustand MKg der Kontakte und die elektronische Unterbrechungseinheit EU in einen niederohmigen Zustand EUn der Schaltelemente für einen Stromfluss im Niederspannungsstromkreis. Nach der Vermeidung des Stromflusses VS ist die mechanische Trennkontakteinheit MK weiterhin in einem geschlossenen Zustand MKg der Kontakte (für einen potenziell wiederkehrenden Stromfluss / um schnell einen Stromfluss wieder zu ermöglichen) und die elektronische Unterbrechungseinheit EU in einen hochohmigen Zustand EUh der Schaltelemente zur Vermeidung des Stromflusses. Nach der Vermeidung des Stromflusses VS erfolgt eine Prüfung auf mindestens einen elektrischen Parameter an mindestens einem lastseitigen Anschluss. Der mindestens eine elektrische Parameter weist einen, insbesondere schutzschaltgerätabhängigen, Sollbereich auf. Die Prüfung wird gemäß Figur 4 so lange durchgeführt, bis der elektrische Parameter im Sollbereich SB liegt. Bei im Sollbereich SB liegenden elektrischen Parameter wechselt die elektronische Unterbrechungseinheit EU in den niederohmigen Zustand EUn, für einen Stromfluss im Niederspannungsstromkreis. D.h. nach dem im Sollbereich SB liegenden elektrischen Parameter ist die mechanische Trennkontakteinheit MK in einem geschlossenen Zustand MKg der Kontakte und die elektronische Unterbrechungseinheit EU in einen niederohmigen Zustand EUn der Schaltelemente für einen Stromfluss im Niederspannungsstromkreis, wie in Figur 4 eingezeichnet.

Figur 5 zeigt eine Darstellung gemäß Figur 4, mit dem Unterschied, dass bei wieder im Sollbereich SB liegenden elektrischen Parameter die elektronische Unterbrechungseinheit EU erst dann in den niederohmigen Zustand EUn wechselt, wenn der elektrische Paramater für einen ersten Zeitbereich ZB1 im Sollbereich SB liegt. D.h. nach dem ersten Zeitbereich ZB1 wechselt die elektronische Unterbrechungseinheit EU in einen niederohmigen Zustand EUn der Schaltelemente für einen Stromfluss im Niederspannungsstromkreis (wobei die mechanische Trennkontakteinheit MK in einem geschlossenen Zustand MKg der Kontakte blieb), wie in Figur 5 eingezeichnet.

Figur 6 zeigt eine Darstellung gemäß Figur 4, mit dem Unterschied, dass bei im Sollbereich SB liegenden elektrischen Parameter die elektronische Unterbrechungseinheit erst dann in den niederohmigen Zustand EUn wechselt, wenn mittels einer bzw. der Eingabeeinheit EE eine Quittierung Q1 erfolgt. D.h. nach der Quittierung Q1 wechselt die elektronische Unterbrechungseinheit EU in den niederohmigen Zustand EUn der Schaltelemente für einen Stromfluss im Niederspannungsstromkreis (wobei die mechanische Trennkontakteinheit MK in einem geschlossenen Zustand MKg der Kontakte blieb), wie in Figur 6 eingezeichnet.

Figur 7 zeigt eine Darstellung gemäß Figur 4, mit dem Unterschied, dass die Prüfung auf mindestens einen elektrischen Parameter nach der Stromflussvermeidung VS (z.B. nach Überschreitung des Stromgrenzwertes oder Strom-Zeitgrenzwertes) innerhalb einer ersten Zeitspanne ZS1 erfolgt.

Nach Ablauf der ersten Zeitspanne ZS1 können die Kontakte der mechanischen Trennkontakteinheit geöffnet MKo werden, wenn mindestens ein elektrischer Parameter außerhalb seines Sollbereichs SB liegt (Sollbereich nicht erreicht innerhalb der ersten Zeitspanne ZS1), wie in Figur 7 eingezeichnet. Die elektronische Unterbrechungseinheit bleibt im hochohmigen Zustand EUh (seit der Stromflussvermeidung VS).

Figur 8 zeigt eine Darstellung gemäß Figur 7, mit dem Unterschied, dass nach Ablauf der ersten Zeitspanne ZS1 die Prüfung auf den mindestens einen elektrischen Parameter mit einem ersten zeitlichen Abstand ZA1 erfolgt, bis zum Erreichen einer ersten Zeitgrenze ZG1. Nach Ablauf der ersten Zeitgrenze ZG1 wechselt die mechanische Trennkontakteinheit MK in einen geöffneten Zustand MKo, sofern der mindestens einen elektrischen Parameter (bis dahin) nicht im Sollbereich SB liegt, wie in Figur 8 eingezeichnet. Die elektronische Unterbrechungseinheit bleibt im hochohmigen Zustand EUh (seit der Stromflussvermeidung VS).

Figur 9 zeigt eine Darstellung gemäß Figur 8, mit dem Unterschied, dass nach Ablauf der ersten Zeitspanne ZS1 der mindestens eine elektrische Parameter seinen Sollbereich SB erreicht. Allerdings wechselt die elektronische Unterbrechungseinheit EU erst dann in den niederohmigen Zustand EUn wechselt, wenn der elektrische Paramater für einen ersten Zeitbereich ZB1 im Sollbereich SB liegt (analog zu Figur 5). D.h. nach dem ersten Zeitbereich ZB1 wechselt die elektronische Unterbrechungseinheit EU in einen niederohmigen Zustand EUn der Schaltelemente für einen Stromfluss im Niederspannungsstromkreis (wobei die mechanische Trennkontakteinheit MK in einem geschlossenen Zustand MKg der Kontakte blieb), wie in Figur 9 eingezeichnet.

In analoger Weise sind weitere Verhaltensweisen bzw. Verfahrensweisen für den Fachmann kombinierbar.

## Patentansprüche

1. Schutzschaltgerät (SG) zum Schutz eines elektrischen Niederspannungsstromkreises aufweisend:
- ein Gehäuse mit netzseitigen und lastseitigen Anschlüssen (L1, N1, L2, N2) für Leiter des Niederspannungsstromkreises,
- eine Stromsensoreinheit (SI), zur Ermittlung der Höhe des Stromes des Niederspannungsstromkreises,
- eine mechanische Trennkontakteinheit (MK), die einen geschlossenen Zustand der Kontakte (MKg) für einen Stromfluss im Niederspannungsstromkreis oder einen geöffneten Zustand der Kontakte (MKo) für eine stromflussvermeidende galvanische Trennung im Niederspannungsstromkreis aufweist,
- eine elektronische Unterbrechungseinheit (EU), die stromkreisseitig in Serie zur mechanischen Trennkontakteinheit (MK) geschaltet ist und die durch halbleiterbasierte Schaltelemente einen hochohmigen Zustand (EUh) der Schaltelemente zur Vermeidung eines Stromflusses oder einen niederohmigen Zustand (EUn) der Schaltelemente zum Stromfluss im Niederspannungsstromkreis aufweist,
- einer Steuerungseinheit (SE), die mit der Stromsensoreinheit (SI), der mechanischen Trennkontakteinheit (MK) und der elektronischen Unterbrechungseinheit (EU) verbunden ist, wobei bei Überschreitung von Stromgrenzwerten oder Strom-Zeit-grenzwerten eine Vermeidung eines Stromflusses (VS) im Niederspannungsstromkreis initiiert wird,
**dadurch gekennzeichnet,**
**dass** das Schutzschaltgerät (SG) derart ausgestaltet ist, dass nach einer Vermeidung eines Stromflusses (VS) durch einen hochohmigen Zustand (EUh) der Schaltelemente der elektronischen Unterbrechungseinheit und geschlossenem Zustand der Kontakte (MKg) eine Prüfung auf mindestens einen elektrischen Parameter an mindestens einem lastseitigen Anschluss erfolgt.

2. Schutzschaltgerät (SG) nach Patentanspruch 1,
**dadurch gekennzeichnet,**
**dass** der mindestens eine elektrische Parameter einen, insbesondere schutzschaltgerätabhängigen, Sollbereich aufweist, dass die Prüfung so lange durchgeführt wird, bis der elektrische Parameter im Sollbereich (SB) liegt,
**dass** bei im Sollbereich liegenden elektrischen Parameter die elektronische Unterbrechungseinheit in den niederohmigen Zustand (EUn) wechselt.

3. Schutzschaltgerät (SG) nach Patentanspruch 2,
**dadurch gekennzeichnet,**
**dass** der Sollbereich durch einen Sollwert gekennzeichnet ist, insbesondere das die Prüfung so lange durchgeführt wird, bis der elektrische Parameter größer als ein minimaler Sollwert ist.

4. Schutzschaltgerät (SG) Schutzschaltgerät (SG) nach einem der vorhergehenden Patentansprüche 2 oder 3,
**dadurch gekennzeichnet,**
**dass** bei im Sollbereich liegenden elektrischen Parameter die elektronische Unterbrechungseinheit erst dann in den niederohmigen Zustand (EUn) wechselt, wenn der elektrische Paramater für einen ersten Zeitbereich (ZB1) im Sollbereich (SB) liegt.

5. Schutzschaltgerät (SG) Schutzschaltgerät (SG) nach einem der vorhergehenden Patentansprüche 2 oder 3,
**dadurch gekennzeichnet,**
**dass** das Schutzschaltgerät (SG) eine Eingabeeinheit aufweist, dass bei im Sollbereich (SB) liegenden elektrischen Parameter die elektronische Unterbrechungseinheit erst dann in den niederohmigen Zustand (EUn) wechselt, wenn mittels der Eingabeeinheit eine Quittierung (Q1) erfolgt.

6. Schutzschaltgerät (SG) nach einem der vorhergehenden Patentansprüche,
**dadurch gekennzeichnet,**
**dass** die Prüfung auf mindestens einen elektrischen Parameter nach Überschreitung des Stromgrenzwertes oder Strom-Zeitgrenzwertes (VS) innerhalb einer ersten Zeitspanne (ZS1) erfolgt,
die insbesondere kleiner als 200 ms, 100 ms, 50ms, 30ms, 20 ms oder 10 ms ist.

7. Schutzschaltgerät (SG) nach Patentanspruch 6,
**dadurch gekennzeichnet,**
**dass** nach Ablauf der ersten Zeitspanne (ZS1) die Kontakte der mechanischen Trennkontakteinheit geöffnet werden, wenn mindestens ein elektrischer Parameter außerhalb seines Sollbereichs (SB) liegt.

8. Schutzschaltgerät (SG) nach einem der vorhergehenden Patentansprüche,
**dadurch gekennzeichnet,**
**dass** der elektrische Parameter ein Strom, eine Spannung, ein Widerstand, eine Kapazität, eine Induktivität, eine Impedanz ist.

9. Schutzschaltgerät (SG) nach einem der vorhergehenden Patentansprüche,
**dadurch gekennzeichnet,**
**dass** die mechanische Trennkontakteinheit (MK) den lastseitigen Anschlüssen zugeordnet ist.

10. Schutzschaltgerät (SG) nach einem der vorhergehenden Patentansprüche,
**dadurch gekennzeichnet,**
**dass** die Prüfung auf mindestens einen elektrischen Parameter an mindestens einem lastseitigen Anschluss durch niederohmig werden mindestes eines Schaltelementes, insbesondere zweier oder aller Schaltelemente, der elektronischen Unterbrechungseinheit erfolgt, insbesondere für eine erste Einschaltdauer (ED1).

11. Schutzschaltgerät (SG) nach Patentanspruch 10,
**dadurch gekennzeichnet,**
**dass** die Prüfung auf mindestens einen elektrischen Parameter an mindestens einem lastseitigen Anschluss durch niederohmig werden der Schaltelemente der elektronischen Unterbrechungseinheit bei einem betragsmäßigen Momentanwert der Spannung erfolgt, der kleiner als ein erster Spannungsschwellwert ist.

12. Schutzschaltgerät (SG) nach Patentanspruch 10 oder 11,
**dadurch gekennzeichnet,**
**dass** die Schaltelemente bei einem betragsmäßigen Momentanwert der Spannung, der größer als der erste Spannungsschwellwert ist, wieder hochohmig werden.

13. Schutzschaltgerät (SG) nach einem der vorhergehenden Patentansprüche 1 bis 9,
**dadurch gekennzeichnet,**
**dass** die Prüfung auf mindestens einen elektrischen Parameter an den lastseitigen Anschlüssen durch Anlegen einer Hilfsspannung, insbesondere Gleichspannung, die kleiner als eine erste Spannungsgrenze ist, erfolgt.

14. Schutzschaltgerät (SG) Schutzschaltgerät (SG) nach einem der vorhergehenden Patentansprüche,
**dadurch gekennzeichnet,**
**dass**, insbesondere nach Ablauf der ersten Zeitspanne (ZS1), die Prüfung mit einem ersten zeitlichen Abstand (ZA1) erfolgt, der insbesondere 1, 3, 5, 10, 15, 30 Sekunden oder 1, 5, 10 oder 15 Minuten ist.

15. Schutzschaltgerät (SG) Schutzschaltgerät (SG) nach einem der vorhergehenden Patentansprüche,
**dadurch gekennzeichnet,**
**dass** nach Ablauf einer ersten Zeitgrenze (ZG1) die mechanische Trennkontakteinheit (MK) in einen geöffneten Zustand der Trennkontakte wechselt,
insbesondere dass die erste Zeitgrenze 15 min, 30 min, 1h, 8h, 24h, 36h oder 48h ist.

16. Schutzschaltgerät (SG) Schutzschaltgerät (SG) nach einem der vorhergehenden Patentansprüche,
**dadurch gekennzeichnet,**
**dass** die Art der Prüfung des mindestens einen elektrischen Parameters abhängig von dem den hochohmigen Zustand der elektronischen Unterbrechungseinheit herbeiführenden Ereignisses ist.

17. Verfahren für ein Schutzschaltgerät (SG) zum Schutz eines elektrischen Niederspannungsstromkreises, bei dem
- netzseitige und lastseitige Anschlüssen (L1, N1, L2, N2) für Leiter des Niederspannungsstromkreises vorgesehen sind,
- eine mechanische Trennkontakteinheit (MK) mit einem geschlossenen Zustand der Kontakte für einen Stromfluss im Niederspannungsstromkreis oder einen geöffneten Zustand der Kontakte für eine stromflussvermeidende galvanische Trennung im Niederspannungsstromkreis vorgesehen ist,
- eine elektronische Unterbrechungseinheit (EU) vorgesehen ist, die stromkreisseitig in Serie zur mechanischen Trennkontakteinheit (MK) geschaltet ist und die durch halbleiterbasierte Schaltelemente einen hochohmigen Zustand der Schaltelemente zur Vermeidung eines Stromflusses oder einen niederohmigen Zustand der Schaltelemente zum Stromfluss im Niederspannungsstromkreis aufweist,
- dass die Höhe des Stromes des Niederspannungsstromkreises ermittelt wird und bei Überschreitung von Stromgrenzwerten oder Strom-Zeitgrenzwerten eine Vermeidung eines Stromflusses im Niederspannungsstromkreis initiiert wird,
**dadurch gekennzeichnet,**
**dass** nach einer Vermeidung eines Stromflusses durch einen hochohmigen Zustand der Schaltelemente der elektronischen Unterbrechungseinheit und geschlossenem Zustand der Kontakte eine Prüfung auf mindestens einen elektrischen Parameter an mindestens einem lastseitigen Anschluss erfolgt.

18. Computerprogrammprodukt umfassend Befehle, die bei der Ausführung des Programms durch einen Mikrocontroller diesen veranlassen nach einer Vermeidung eines Stromflusses durch einen hochohmigen Zustand der Schaltelemente der elektronischen Unterbrechungseinheit und geschlossenem Zustand der Kontakte eine Prüfung auf mindestens einen elektrischen Parameter an mindestens einem lastseitigen Anschluss gemäß einem der Patentansprüche 1 bis 17 durchzuführen.

19. Computerlesbares Speichermedium, auf dem das Computerprogrammprodukt nach Patentanspruch 18 gespeichert ist.

20. Datenträgersignal, das das Computerprogrammprodukt nach Patentanspruch 18 überträgt.

## Claims

1. Circuit breaker device (SG) for protecting an electrical low-voltage circuit, comprising:
- a housing having grid-side and load-side connections (L1, N1, L2, N2) for conductors of the low-voltage circuit,
- a current sensor unit (SI) for ascertaining the level of the current of the low-voltage circuit,
- a mechanical isolating contact unit (MK) which has a closed state of the contacts (MKg) for allowing a flow of current in the low-voltage circuit or an open state of the contacts (MKo) for a DC isolation in the low-voltage circuit which prevents a flow of current,
- an electronic interruption unit (EU) which is connected in series with the mechanical isolating contact unit (MK) on the circuit side and which, as a result of semiconductor-based switching elements, has a high-impedance state (EUh) of the switching elements in order to prevent a flow of current and a low-impedance state (EUn) of the switching elements for allowing the flow of current in the low-voltage circuit,
- a control unit (SE) which is connected to the current sensor unit (SI), the mechanical isolating contact unit (MK) and the electronic interruption unit (EU), wherein a process for preventing a flow of current (VS) in the low-voltage circuit is initiated if current limit values or current/time limit values are exceeded,
**characterized in that**
the circuit breaker device (SG) is configured in such a way that, after a flow of current (VS) has been prevented by way of a high-impedance state (EUh) of the switching elements of the electronic interruption unit and closed state of the contacts (MKg), at least one electrical parameter at at least one load-side connection is checked.

2. Circuit breaker device (SG) according to patent claim 1, **characterized in that**
the at least one electrical parameter has a target range, which in particular is dependent on the circuit breaker device,
**in that** the checking is carried out until the electrical parameter is within the target range (SB),
**in that** the electronic interruption unit changes to the low-impedance state (EUn) when the electrical parameter is within the target range.

3. Circuit breaker device (SG) according to patent claim 2,
**characterized in that**
the target range is **characterized by** a target value,
in particular in that the checking is carried out until the electrical parameter is greater than a minimum target value.

4. Circuit breaker device (SG) circuit breaker device (SG) according to either one of the preceding patent claims 2 and 3,
**characterized in that**,
when the electrical parameter is within the target range, the electronic interruption unit changes to the low-impedance state (EUn) only when the electrical parameter is within the target range (SB) for a first time range (ZB1).

5. Circuit breaker device (SG) circuit breaker device (SG) according to either one of the preceding patent claims 2 and 3,
**characterized in that**
the circuit breaker device (SG) has an input unit,
**in that**, when the electrical parameter is within the target range (SB), the electronic interruption unit changes to the low-impedance state (EUn) only when there is confirmation (Q1) by means of the input unit.

6. Circuit breaker device (SG) according to any one of the preceding patent claims,
**characterized in that**
at least one electrical parameter is checked within a first time period (ZS1) after the current limit value or current/time limit value (VS) has been exceeded,
said first time period being in particular less than 200 ms, 100 ms, 50 ms, 30 ms, 20 ms or 10 ms.

7. Circuit breaker device (SG) according to patent claim 6,
**characterized in that**,
after the first time period (ZS1) has passed, the contacts of the mechanical isolating contact unit are opened when at least one electrical parameter is outside of the target range (SB) thereof.

8. Circuit breaker device (SG) according to any one of the preceding patent claims,
**characterized in that**
the electrical parameter is a current, a voltage, a resistance, a capacitance, an inductance, an impedance.

9. Circuit breaker device (SG) according to any one of the preceding patent claims,
**characterized in that**
the mechanical isolating contact unit (MK) is assigned to the load-side connections.

10. Circuit breaker device (SG) according to any one of the preceding patent claims,
**characterized in that**
at least one electrical parameter at at least one load-side connection is checked by way of at least one switching element, in particular two or all switching elements, of the electronic interruption unit coming to have a low impedance, in particular for a first switched-on period (ED1).

11. Circuit breaker device (SG) according to patent claim 10,
**characterized in that**
at least one electrical parameter at at least one load-side connection is checked by way of the switching elements of the electronic interruption unit coming to have a low impedance at an absolute-value instantaneous value of the voltage that is lower than a first voltage threshold value.

12. Circuit breaker device (SG) according to patent claim 10 or 11,
**characterized in that**
the switching elements come to have a high impedance again at an absolute-value instantaneous value of the voltage that is greater than the first voltage threshold value.

13. Circuit breaker device (SG) according to any one of preceding patent claims 1 to 9,
**characterized in that**
at least one electrical parameter at the load-side connections is checked by applying an auxiliary voltage, in particular a DC voltage, that is lower than a first voltage limit.

14. Circuit breaker device (SG) circuit breaker device (SG) according to any one of the preceding patent claims,
**characterized in that**,
in particular after the first time period (ZS1) has passed, the checking is carried out at a first time interval (ZA1) that in particular is 1, 3, 5, 10, 15, 30 seconds or 1, 5, 10 or 15 minutes.

15. Circuit breaker device (SG) circuit breaker device (SG) according to any one of the preceding patent claims,
**characterized in that**
the mechanical isolating contact unit (MK) changes to an open state of the isolating contacts after a first time limit (ZG1) has passed,
in particular **in that** the first time limit is 15 min, 30 min, 1 h, 8 h, 24 h, 36 h or 48 h.

16. Circuit breaker device (SG) circuit breaker device (SG) according to any one of the preceding patent claims,
**characterized in that**
the type of check of the at least one electrical parameter is dependent on the event that causes the high-impedance state of the electronic interruption unit.

17. Method for a circuit breaker device (SG) for protecting an electrical low-voltage circuit, in which
- grid-side and load-side connections (L1, N1, L2, N2) are provided for conductors of the low-voltage circuit,
- a mechanical isolating contact unit (MK) having a closed state of the contacts for allowing a flow of current in the low-voltage circuit or an open state of the contacts for a DC isolation in the low-voltage circuit which prevents a flow of current is provided,
- an electronic interruption unit (EU) is provided, which is connected in series with the mechanical isolating contact unit (MK) on the circuit side and which, as a result of semiconductor-based switching elements, has a high-impedance state of the switching elements in order to prevent a flow of current and a low-impedance state of the switching elements for allowing the flow of current in the low-voltage circuit,
- the level of the current of the low-voltage circuit is ascertained and a process for preventing a flow of current in the low-voltage circuit is initiated if current limit values or current/time limit values are exceeded,
**characterized in that**,
after a flow of current has been prevented by way of a high-impedance state of the switching elements of the electronic interruption unit and closed state of the contacts, at least one electrical parameter at at least one load-side connection is checked.

18. Computer program product comprising commands that, when the program is executed by way of a microcontroller, prompt same, after a flow of current has been prevented by way of a high-impedance state of the switching elements of the electronic interruption unit and closed state of the contacts, to check at least one electrical parameter at at least one load-side connection according to any one of patent claims 1 to 17.

19. Computer-readable storage medium on which the computer program product according to patent claim 18 is stored.

20. Data carrier signal that transmits the computer program product according to patent claim 18.

## Revendications

1. Disjoncteur (SG) pour la protection d'un circuit électrique basse tension, présentant :
- un boîtier avec des bornes côté réseau et côté charge (L1, N1, L2, N2) pour les conducteurs du circuit basse tension,
- une unité de détection de courant (SI) pour déterminer l'intensité du courant du circuit basse tension,
- une unité de contact de coupure mécanique (MK) présentant un état fermé des contacts (MKg) pour permettre un passage du courant dans le circuit basse tension ou un état ouvert des contacts (MKo) pour une isolation galvanique afin d'empêcher le passage du courant dans le circuit basse tension,
- une unité d'interruption électronique (EU) qui est montée en série côté circuit électrique par rapport à l'unité de contact de coupure mécanique (MK) et qui, grâce à des éléments de commutation à semi-conducteurs, présente un état à haute impédance (EUh) des éléments de commutation pour empêcher le passage du courant, ou un état à faible impédance (EUn) des éléments de commutation pour permettre le passage du courant dans le circuit basse tension,
- une unité de commande (SE) qui est reliée à l'unité de détection de courant (SI), à l'unité de contact de coupure mécanique (MK) et à l'unité d'interruption électronique (EU), dans laquelle, en cas de dépassement des valeurs limites de courant ou des valeurs limites de courant-temps, une interruption du passage de courant (VS) dans le circuit basse tension est initiée,
**caractérisé en ce que**
le disjoncteur (SG) est conçu de telle sorte que, après un évitement d'un passage du courant (VS) grâce à un état à haute impédance (EUh) des éléments de commutation de l'unité d'interruption électronique et à l'état fermé des contacts (MKg), un contrôle d'au moins un paramètre électrique soit effectué sur au moins une borne côté charge.

2. Disjoncteur (SG) selon la revendication 1,
**caractérisé en ce que**
l'au moins un paramètre électrique présente une plage de consigne, qui dépend en particulier du disjoncteur,
le contrôle est effectué jusqu'à ce que le paramètre électrique se situe dans la plage de consigne (SB),
lorsque les paramètres électriques se situent dans la plage de consigne, l'unité d'interruption électronique passe à l'état à faible impédance (EUn).

3. Disjoncteur (SG) selon la revendication 2,
**caractérisé en ce que**
la plage de consigne est définie par une valeur de consigne, en particulier, le contrôle est effectué jusqu'à ce que le paramètre électrique soit supérieur à une valeur de consigne minimale.

4. Disjoncteur (SG) selon l'une des revendications 2 ou 3 précédentes,
**caractérisé en ce que**
lorsque les paramètres électriques se situent dans la plage de consigne, l'unité d'interruption électronique passe à l'état à faible impédance (EUn) seulement lorsque le paramètre électrique se situe dans la plage de consigne (SB) pendant une première plage de temps (ZB1).

5. Disjoncteur (SG) selon l'une des revendications 2 ou 3 précédentes,
**caractérisé en ce que**
le disjoncteur (SG) présente une unité de saisie,
lorsque les paramètres électriques se situent dans la plage de consigne (SB), l'unité d'interruption électronique passe à l'état à faible impédance (EUn) seulement après un acquittement (Q1) effectué au moyen de l'unité de saisie.

6. Disjoncteur (SG) selon l'une des revendications précédentes,
**caractérisé en ce que**
le contrôle d'au moins un paramètre électrique est effectué après dépassement de la valeur limite de courant ou de la valeur limite de courant-temps (VS) au cours d'une première période (ZS1), qui est en particulier inférieure à 200 ms, 100 ms, 50 ms, 30 ms, 20 ms ou 10 ms.

7. Disjoncteur (SG) selon la revendication 6,
**caractérisé en ce que**
après expiration de la première période (ZS1), les contacts de l'unité de contact de coupure mécanique s'ouvrent si au moins un paramètre électrique se situe en dehors de sa plage de consigne (SB).

8. Disjoncteur (SG) selon l'une des revendications précédentes,
**caractérisé en ce que**
le paramètre électrique est un courant, une tension, une résistance, une capacité, une inductance ou une impédance.

9. Disjoncteur (SG) selon l'une des revendications précédentes,
**caractérisé en ce que**
l'unité de contact de coupure mécanique (MK) est associée aux bornes côté charge.

10. Disjoncteur (SG) selon l'une des revendications précédentes,
**caractérisé en ce que**
le contrôle d'au moins un paramètre électrique sur au moins une borne côté charge est effectué par la mise en basse impédance d'au moins un élément de commutation, en particulier de deux ou de tous les éléments de commutation, de l'unité d'interruption électronique, en particulier pour une première durée d'enclenchement (ED1).

11. Disjoncteur (SG) selon la revendication 10,
**caractérisé en ce que**
le contrôle d'au moins un paramètre électrique sur au moins une borne côté charge est effectué par la mise en basse impédance des éléments de commutation de l'unité d'interruption électronique lorsque la valeur absolue instantanée de la tension est inférieure à un premier seuil de tension.

12. Disjoncteur (SG) selon la revendication 10 ou 11,
**caractérisé en ce que**
les éléments de commutation redeviennent à haute impédance lorsque la valeur absolue de la tension instantanée est supérieure au premier seuil de tension.

13. Disjoncteur (SG) selon l'une des revendications 1 à 9 précédentes,
**caractérisé en ce que**
le contrôle d'au moins un paramètre électrique au niveau des bornes côté charge est effectué par l'application d'une tension auxiliaire, en particulier une tension continue, qui est inférieure à une première limite de tension.

14. Disjoncteur (SG) selon l'une des revendications précédentes,
**caractérisé en ce que**
en particulier, après l'expiration de la première période (ZS1), le contrôle est effectué à un premier intervalle de temps (ZA1) qui est en particulier de 1, 3, 5, 10, 15 ou 30 secondes, ou de 1, 5, 10 ou 15 minutes.

15. Disjoncteur (SG) selon l'une des revendications précédentes,
**caractérisé en ce que**
après l'expiration d'une première limite de temps (ZG1), l'unité de contact de coupure mécanique (MK) passe à l'état ouvert des contacts de coupure, en particulier la première limite de temps est de 15 minutes, 30 minutes, 1 heure, 8 heures, 24 heures, 36 heures ou 48 heures.

16. Disjoncteur (SG) selon l'une des revendications précédentes,
**caractérisé en ce que**
le type de contrôle d'au moins un paramètre électrique dépend de l'événement provoquant l'état à haute impédance de l'unité d'interruption électronique.

17. Procédé pour un disjoncteur (SG) pour la protection d'un circuit électrique basse tension, dans lequel
- des bornes côté réseau et côté charge (L1, N1, L2, N2) sont prévues pour les conducteurs du circuit électrique basse tension,
- une unité de contact de coupure mécanique (MK) est prévue, avec un état fermé des contacts pour le passage du courant dans le circuit électrique basse tension ou un état ouvert des contacts pour une isolation galvanique pour empêcher le passage du courant dans le circuit électrique basse tension,
- une unité d'interruption électronique (EU) est prévue, qui est connectée côté circuit en série par rapport à l'unité de contact de coupure mécanique (MK) et qui, grâce à des éléments de commutation à semi-conducteurs, présente un état à haute impédance des éléments de commutation pour empêcher le passage du courant, ou un état à faible impédance des éléments de commutation pour permettre le passage du courant dans le circuit basse tension,
- l'intensité du courant du circuit basse tension est déterminée et, en cas de dépassement de valeurs limites de courant ou de valeurs limites de courant-temps, un évitement d'un passage de courant dans le circuit basse tension est initié, **caractérisé en ce que**
après un évitement du passage du courant grâce à un état à haute impédance des éléments de commutation de l'unité d'interruption électronique et à l'état fermé des contacts, un contrôle d'au moins un paramètre électrique est effectué sur au moins une borne côté charge.

18. Produit de programme informatique comprenant des instructions qui, lors de l'exécution du programme par un microcontrôleur, amènent celui-ci, après un évitement du passage du courant grâce à un état à haute impédance des éléments de commutation de l'unité d'interruption électronique et à l'état fermé des contacts, à effectuer un contrôle d'au moins un paramètre électrique sur au moins une borne côté charge, selon l'une des revendications 1 à 17.

19. Support de stockage lisible par ordinateur sur lequel est enregistré le produit de programme informatique selon la revendication 18.

20. Signal de support de données transmis par le produit de programme informatique selon la revendication 18.
